# EUROPEAN PATENT APPLICATION

(11) **EP 1 739 678 A1**
(43) Date of publication of application: **03.01.2007**
(21) Application number: 06253416.9
(22) Date of filing: 29.06.2006
(51) Int. Cl.: G11B 27/034, G06F 12/08, G06F 3/06, G06F 17/30

(54) **Recording device, method thereof, program product and program recording medium**

(30) Priority: 29.06.2005 JP 2005189817
(71) Applicant: SONY CORPORATION, Tokyo 141 (JP)
(72) Inventor: Fukuda, Masaaki, Tokyo 141 (JP); Isozaki, Masaaki, Tokyo 141 (JP); Saito, Kazuyuki, Tokyo 141 (JP)
(74) Representative: Leppard, Andrew John

(57) **Abstract**

A recording device includes: a first recording medium in which temporally continuous content data is recorded; a second recording medium in which the whole content data is recorded; and a recording control means for controlling the recording of content data in the first recording medium and the second recording medium so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

## Description

The invention relates to a recording device and a method, a program product and a program recording medium, and especially, relates to a recording device and a method, a program product and a program recording medium which records content.

There exists a recording and playback system in which a lot of content can be dealt with easily by recording content data in plural recording media and automating the mounting of a recording medium to a drive.

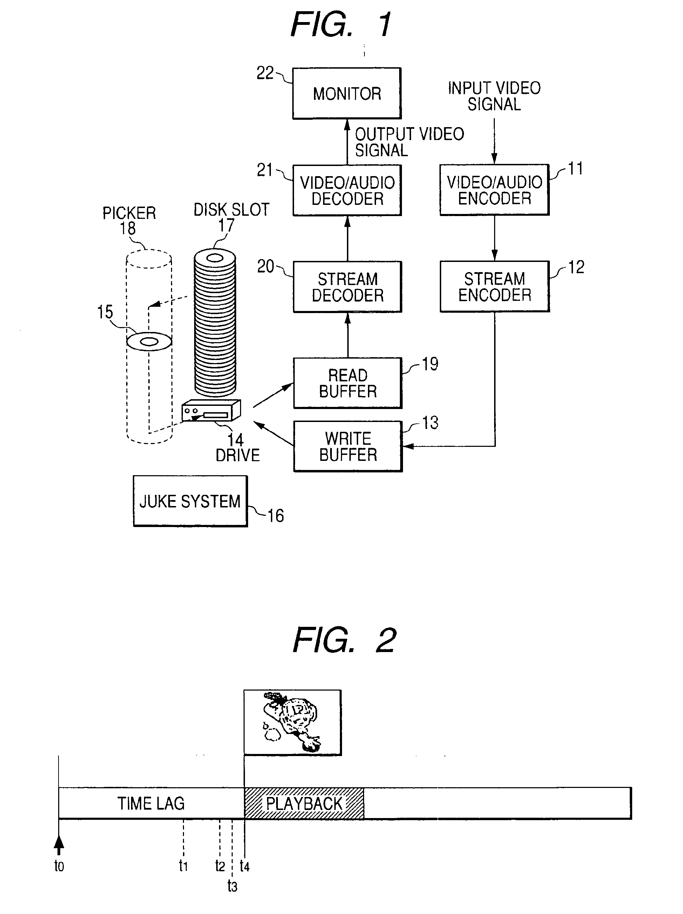

Fig. 1 is a block diagram showing a configuration of a conventional recording and playback system. A video/audio encoder 11 encodes baseband video data corresponding to an inputted input video signal in a MPEG (Moving Pictures Experts Group) system. Also, the video/audio encoder 11 encodes baseband audio data corresponding to an inputted audio data (not shown) in the MPEG system. The video/audio encoder 11 supplies data obtained by encoding to a stream encoder 12.

The stream encoder 12 multiplexes the encoded data supplied from the video/audio encoder 11, converting it into a stream in a MPEG transport stream system or a MPEG program stream system to supply the stream obtained by the conversion to a write buffer 13.

The write buffer 13 temporarily stores the stream (data) supplied from the stream encoder 12 and supplies the stored stream (data) to a drive 14.

The drive 14 records the data supplied from the write buffer 13 in an optical disk 15 mounted thereon as a file.

A juke system 16 controls insertion and ejection of the optical disk 15 to the drive 14. The juke system 16 allows a picker 18 to select any the optical disk 15 from disk slots 17 which store respective plural optical disks 15. The picker 18 carries the selected optical disk 15 based on control of the juke system 16 to mount the disk 15 on the drive 14. Also, the picker 18 carries the optical disk 15 ejected from the drive 14 to be stored in any of disk slots 17 based on control of the juke system 16. Namely, the juke system 16 controls the picker 18.

The drive 14 reads data recorded as the file from the mounted optical disk 15 and supplies the read data to a read buffer 19. A semiconductor memory or a hard disk is used as the read buffer 19, storing data (stream) supplied from the drive 14 temporarily. The read buffer 19 absorbs readout jitter and smoothes a data rate so as to be fixed to supply the stored data (stream) to a stream decoder 20.

The stream decoder 20 divides the stream of the MPEG transport stream system or the MPEG program stream system into video data and audio data, and supplies the divided video data and audio data to a video/audio decoder 21.

The video/audio decoder 21 decodes encoded video data and audio data into so-called baseband video data and audio data. Also, the video/audio decoder 21 supplies an output video signal and an audio signal (not shown) to a monitor 22, which are based on the baseband video data and audio data obtained by the decoding. The monitor 22 displays video based on the output video signal and outputs audio based on the supplied audio signal.

Here, a playback process will be explained with reference to Fig. 2. At a time "t₀", when playback is requested by a user, the optical disk 15 which record content data playback of which is requested is carried from the disk slot 17 to the drive 14 by means of the picker 18, and is mounted on the drive 14 at a time "t₁".

At a time "t₂", data recorded in the mounted optical disk 15 is started to be read by the drive 14 and the data is stored in the read buffer 19. Then, at a time "t₃", when a predetermined amount of data is pooled in the read buffer 19, the data stored in the read buffer 19 is read out to the stream decoder 20. The video/audio decoder 21 decodes video data and audio data and supplies an output video signal and an audio signal corresponding to video data and audio data obtained by the decoding to the monitor 22. At a time "t₄", the monitor 22 displays video and outputs audio based on the output video signal and the audio signal.

During time from the time "t₀" when the playback is requested by the user until the time "t₄" when video is displayed in the monitor 22, a time lag occurs, which corresponds to time necessary to mount the optical disk 15 stored in the disk slot 17 on the driver 14 and to read video data from the mounted optical disk 15. The time lag is approximately 20 to 30 seconds through depending on the configuration of the recording and playback system.

Since the time lag occurs every time when playback is requested, the user suffers a lot of stress due to the time lag, therefore, this point is a big problem in view of an operational feeling.

As a measure against the above problem, it can be considered that HSM (Hierarchical Storage Management) software is used. The HSM software performs management of automatically moving a file stored in a high-speed auxiliary recording device such as a hard disk to a slower and inexpensive recording medium (for example, refer to Patent document 1).

In a general HSM, a header of data is stored in the hard disk which is a high-speed primary storage as a cache file, and the whole data is stored in the optical disk as a low-speed secondary storage. In the case that an access to the data occurs, while the access to the header of data cached in the primary storage is made, the rest of the data is copied from the secondary storage to the primary storage. Accordingly, it seems to the user that the whole data is recorded in the primary storage.

As described above, the whole data is arranged in the secondary storage whose cost per recoding capacity is low and the primary storage is used as the cache memory, thereby making the user seemingly feel like using a huge primary storage.

In the above HSM system, when an amount of data stored in the primary storage per recording capacity, that is, the usage rate of the primary rate exceeds a predetermined threshold value, a migration process is started and available space is made in the primary storage. The migration process is a process in which the whole data is recorded in the secondary storage and a part of data is deleted from the primary storage.

In the conventional HSM system, after the HSM system lists up all data managed as files and determines candidates for files to which the migration process is applied, actual migration process is applied to these candidates.
[Patent document] JP-A-2003-296151

However, in the above system, when the number of files managed by the HSM system increases, a time lag occurs until the available space is made in the primary storage.

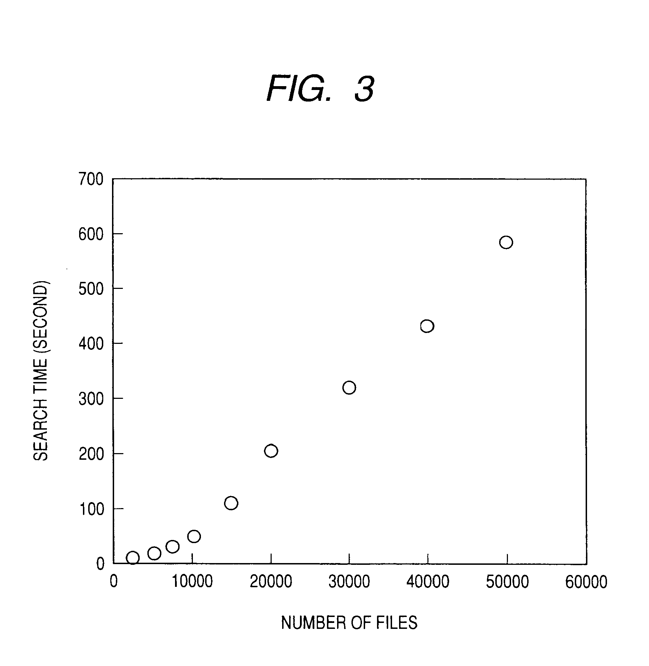

Fig. 3 is a graph showing time necessary for the process of determining candidates of files to which the migration process is applied. A horizontal axis in Fig. 3 shows the number of files and a vertical axis in Fig. 3 shows time necessary for the process of determining the candidates of files to which the migration process is applied.

The time necessary for the process of determining candidates of files to which the migration process is applied becomes longer when the number of files increases, specifically, when candidates of files to which the migration process is applied are determined from 50, 000 files, it took approximately 600 seconds.

In this case, data which requires larger storage space than available space of the primary storage cannot be recorded in the primary storage until available space is made by the migration process being executed. In addition, a conventional method of determining candidates of files to which the migration process is applied is a process whose computing amount is extremely large. A state in which a large load is imposed on the system lasts for a long time until candidates of files to which the migration process is applied are determined and the migration is actually completed, which may be an obstacle to normal operation of the system.

Embodiments of the invention seek to be capable of making available space more quickly.

Aspects of the present invention are set out in the claims.

A first embodiment of the invention is a recording device including a first recording medium in which temporally continuous content data is recorded, a second recording medium in which the whole content data is recorded, and a recording control means for controlling the recording of content data in the first recording medium and the second recording medium so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

In the first embodiment of the invention, the recording of content data in the first recording medium and the second recording medium may be controlled so that, in the case that temporally continuous content data is recorded in the first recording medium, the whole content data is recorded in the second recording medium and a part of content data is deleted from the first recording medium, a part of content data whose whole data is recorded in the second recording medium is deleted from the first recording medium, and when the data amount of content data recorded in the first recording medium does not become less than a predetermined threshold even after the part of data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

The recording control means may be capable of controlling the recording of content data in the first recording medium and the second recording medium so that, in the case that the data amount of content data recorded in the first recording medium does not become less than a predetermined threshold even after a part of data whose whole data is recorded in the second recording medium is deleted from the first recording medium, with respect to a content in which the process of deleting a part of content data from the first recording medium was interrupted after the whole content data was recorded in the second recording medium, the interrupted process is started again, and when the data amount of content data recorded in the first recording medium does not become less than a threshold even after the interrupted process is completed, with respect to a content whose data is not recorded in the second recording medium, the whole content data is recorded in the second recording medium, then, a part of content data is deleted from the first recording medium.

The recording control means may be capable of controlling the recording of content data in the first recording medium so that, a part of content data is deleted from the first recording medium in order that the content is scanned by a designated scanning method.

The recording control means may be capable of controlling the recording of content data in the first recording medium so that a part of content data is deleted from the first recording medium in order that content is scanned by a method of pre-order traversal, in-order traversal or post-order traversal.

A storage means which stores access history to contents is further included, and the recording control means is capable of controlling the recording of content data in the first recording medium based on the access history to the content.

As described above, according to the first embodiment of the invention, it is possible to create available space more rapidly.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
Fig. 1 is a block diagram showing a configuration of a conventional recording and playback system;
Fig. 2 is a view explaining a conventional playback process;
Fig. 3 is a graph showing time necessary for determining candidate of files to which a migration process is applied;
Fig. 4 is a block diagram showing a configuration of a recording and playback system according to an embodiment of the invention;
Fig. 5 is a block diagram showing the detailed configuration of the recording and playback system;
Fig. 6 is a table explaining information used in the recording and playback system;
Fig. 7 is a diagram explaining cache files recorded in a HDD;
Fig. 8 is a diagram explaining the cache file in a stub state;
Fig. 9 is a diagram explaining area information in areas and extension attributes;
Fig. 10 is a flowchart explaining a writing process of hint information;
Fig. 11 is a flowchart explaining the migration process;
Fig. 12 is a flowchart explaining a migration process;
Fig. 13 is a flowchart explaining the migration process;
Fig . 14 is a table showing an example of an access history table;
Fig. 15 is a view showing an example of a directory structure;
Fig. 16 is a view showing an example of scanning of pre-order traversal;
Fig. 17 is a flowchart explaining a process of generating a cache file in the stub state;
Fig. 18 is a flowchart explaining a process of reading data from an index_n;
Fig. 19 is a flowchart explaining the details of a reload process;
Fig. 20 is a block diagram showing another configuration of the recording and playback system according to an embodiment of the invention;
Fig. 21 is a block diagram showing further another configuration of the recording and playback system according to an embodiment of the invention; and
Fig. 22 is a block diagram showing a configuration example of a personal computer.

Hereinafter, embodiments of the invention will be explained. The correspondence between constituent features described in claims and specific examples in embodiments of the invention is represented as follows. This description is made for verifying that specific examples supporting the invention described in claims are described in the embodiments of the invention. Therefore, even if there is a specific example which is not described here as the example corresponding to the constituent feature through it is described in embodiments of the invention, that does not mean that the specific example does not correspond to the constituent feature. Conversely, even if a specific example is described here as the example corresponding to the constituent feature, that does not mean that the specific example does not correspond to other constituent features other than the constituent feature.

Further, the description does not mean that all inventions corresponding to the specific examples described in the embodiments of the invention are described in claims. In other words, the description does not deny existence of the inventions corresponding to specific examples described in the embodiment of the invention and not described in claims of the application, namely, existence of inventions of a divisional application or additional inventions by amendment in the future.

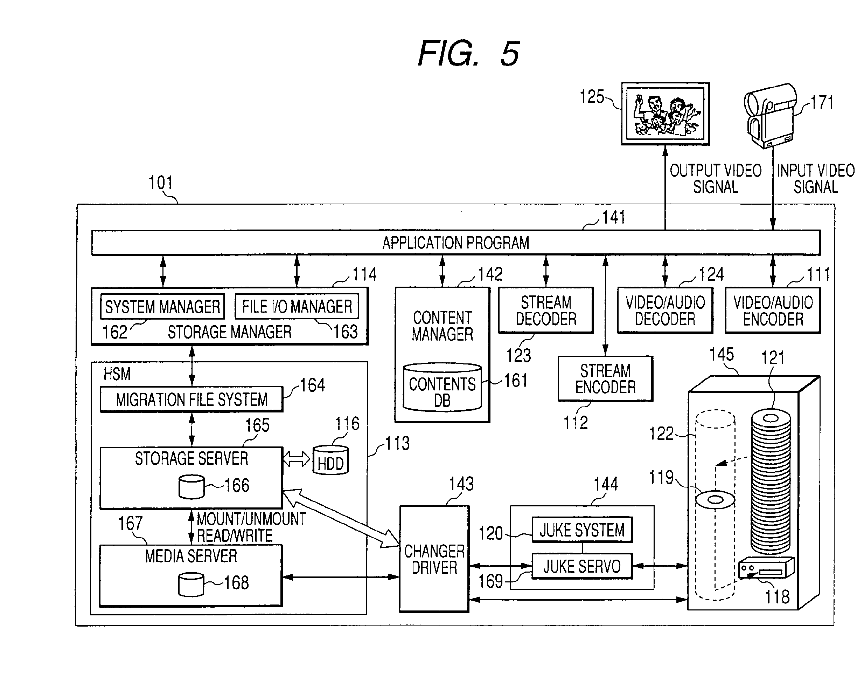

A recording device according to an embodiment of the invention includes a first recording medium in which temporally continuous content data is recorded (for example, the HDD 116 in Fig. 5), a second recording medium in which the whole content data is recorded (for example, the optical disk 119 in Fig. 5), and a recording control means which controls the recording of content data in the first recording medium or the second recording medium (for example, the storage manager 114 in Fig. 5) so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

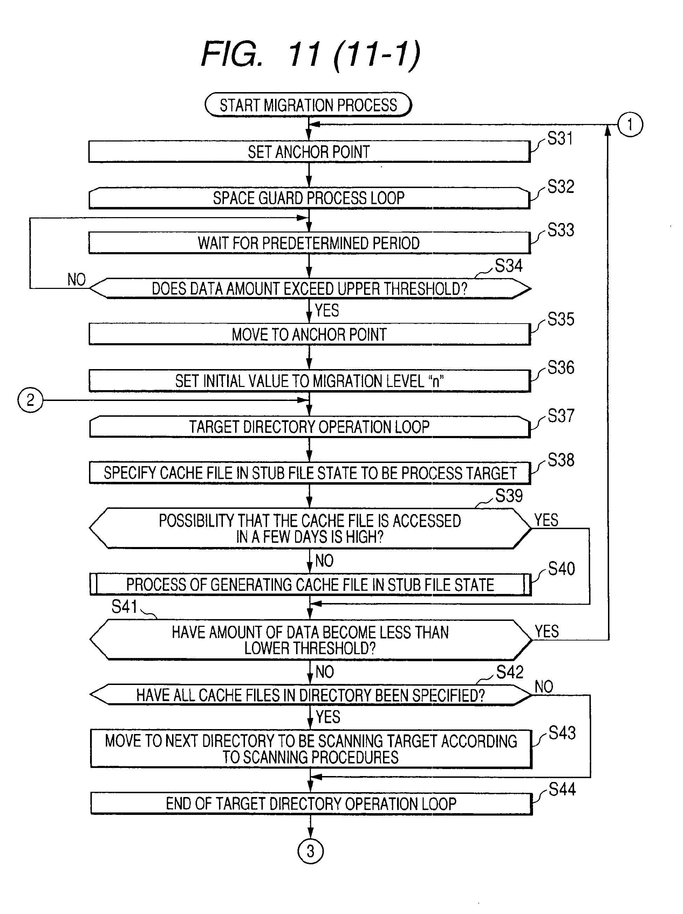

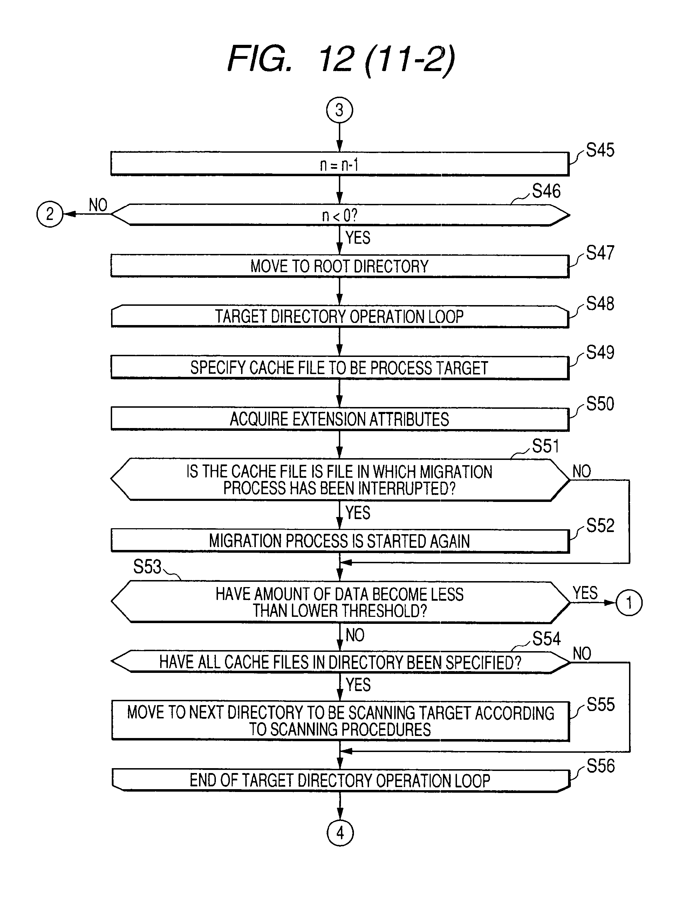

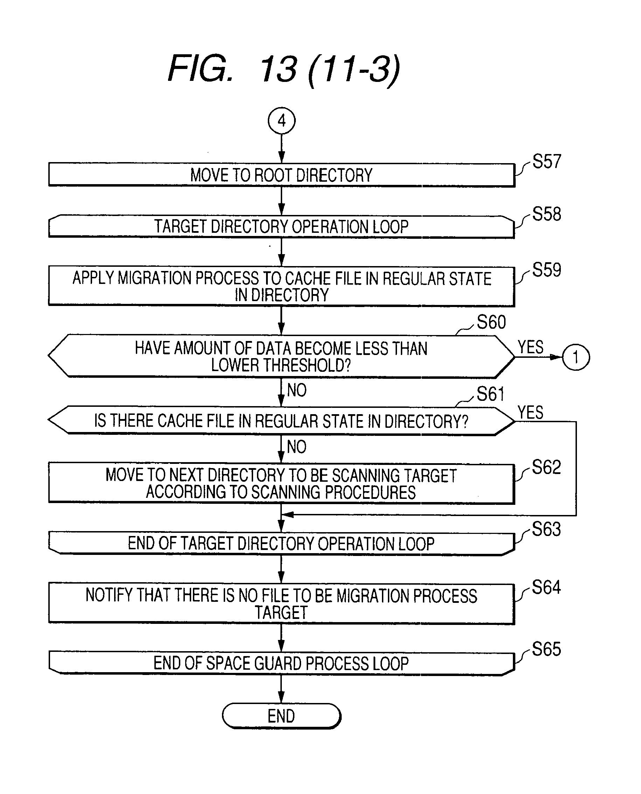

A recording method according to an embodiment of the invention is a recording method of a recording device which records temporally continuous content data in a first recording medium and which records the whole content data in a second recording medium, including a judgment step of judging whether a part of content data is deleted from the first recording medium or not (for example, step S34 of Fig. 11) and a recording control step of controlling the recording of content data in the first recording medium or the second recording medium (for example, step S35 to S63 of Fig. 11 to Fig. 13) so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

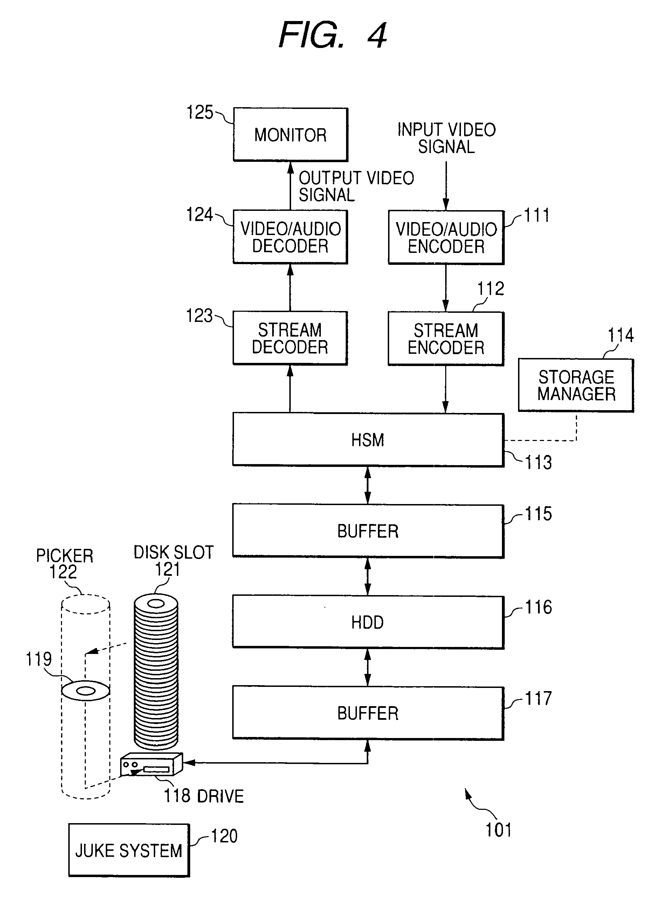

Fig. 4 is a block diagram showing a configuration of a recording and playback system 101 according to an embodiment of the invention. A video/audio encoder 111 encodes baseband video data corresponding to an inputted input video signal in a MPEG system. Also, the video/audio encoder 111 encodes baseband audio data corresponding to an inputted audio signal (not shown) in the MPEG system. The video/audio encoder 111 supplies data obtained by the encoding to a stream encoder 112.

The stream encoder 112 multiplexes the encoded data supplied from the video/audio encoder 111, converting it into a stream in a MPEG transport stream system or in a MPEG program stream system to supply the stream obtained by the conversion to a HSM 113.

The HSM 113 manages hierarchical recording of content data to a recording medium (it can also be described that the HSM 113 manages recording of content data to a hierarchical recording medium). The HSM 113 supplies the stream supplied from the stream encoder 112 to a HDD (Hard Disk Drive) 116 through a buffer 115 based on control by a storage manager 114. The HDD 116 is one example of a high-speed primary storage, recording the stream (data) supplied from the HSM 113 through the buffer 115 based on control by the HSM 113. Also, the HDD 116 supplies the recorded stream (data) to the buffer 115 or a buffer 117.

A semiconductor memory or a part of recording space of the HDD 116 is used as the buffer 115, temporarily storing the stream (data) supplied from the HSM 113 or the HDD 11.6, and supplying the stored stream (data) to the HSM 113 or the HDD 116. A semiconductor memory or a part of recording space of the HDD 116 is used as the buffer 117, temporarily storing the stream (data) supplied from the HDD 116 or the buffer 117, and supplying the stored stream (data) to the HDD 116 or a drive 118.

The buffer 115 and the buffer 117 absorb readout jitter and smooth a data rate so as to be fixed.

The drive 118 records data supplied from the buffer 117 as a file in an optical disk 119 mounted thereon. The optical disk 119 is one example of a slow-speed secondary storage, for example, a MO (Mangeto-Optical disk), a DVD (Degital Versatile Disc), a CD (Compact Disc) or the like.

A juke system 120 controls insertion and ejection of the optical disk 119 to the drive 118. The juke system 120 allows a picker 122 to select any optical disk 119 from disk slots 121 which store respective plural optical disks 119. The picker 122 carries the selected optical disk 119 based on control of the juke system 120 to mount the disk 119 on the drive 118. Also, the picker 122 carries the optical disk 119 ejected from the drive 118 to be stored in any one of the disk slot 121 based on control of the juke system 120. Namely, the juke system 120 controls the picker 122.

The drive 118 reads data recorded as the file from the mounted optical disk 119 and supplies the read data to a buffer 117. The data read from the optical disk 119 is supplied to the HDD 116 through the buffer 117 to be recorded in the HDD 116.

The HSM 113 reads the data (stream) which has been read from the optical disk 119 and stored in the HDD 116 through the buffer 115 from the HDD 116 and supplies the read data (stream) to a stream decoder 123.

The stream decoder 123 divides the stream of the MPEG transport stream system or the MPEG program stream system into video data and audio data, and supplies the divided video data and audio data to a video/audio decoder 124.

The video/audio decoder 124 decodes the encoded video data and audio data into so-called baseband video data and audio data. Also, the video/audio decoder 124 supplies an output video signal and an audio signal (not shown) to a monitor 125, which are based on the baseband video data and audio data obtained by the decoding. The monitor 125 displays video based on the output video signal and outputs audio based on the supplied audio signal.

When recording the content in the recording and playback system 101, the whole content data corresponding to an inputted input video signal is recorded in the HDD 116. During available time of the drive 118, all content data recorded in the 116 is copied to the optical disk 119. In this case, the HSM 113 records information indicating which content data has been written in which optical disk 119 in a later-described store database. Although the details will be described later, the information includes information for identifying the file which stores content data, information for identifying the optical disk 119 in which the whole content data is written, a date and time when the data was written, a name of the file in which the content data is stored and the like.

It is also preferable to record a stream which has been directly inputted from the exterior, or to output a stream. In addition, a system for encoding data is not limited to the MPEG, and an encoding system for prescribed compression and extension is preferable. Further, a stream format does not limit the invention.

Fig. 5 is a block diagram showing a more detailed configuration of the recording and playback system 101. An application program 141 has a function of an interface for a user, and acquires instructions from the user or notifies various information concerning the recording and playback system 101. The application program 141 controls the whole recording and playback system 101.

For example, the application program 141 controls the video/audio encoder 111, the stream encoder 112, the video/audio decoder 124, the stream decoder 123, a content manager 142 and the storage manager 114 according to operation of the user. The application program 141 acquires an input video signal and an audio signal from a video camera 171, and supplies the acquired input video signal and the audio signal to the video/audio encoder 111. Also, the application program 141 acquires an output video signal and an audio signal from the video/audio decoder 124 and supplies the acquired output video signal and the audio signal to the monitor 125. Further, the application program 141 supplies a stream (data) supplied from the HSM 113 to the stream decoder 123 through the storage manager 114.

The content manager 142 manages subject matter of content recorded in the recording and playback system 101 and searches subject matter of content. The content manager 142 controls recording of various information concerning content in a content database (DB) 161 and readout of information concerning content from the content database 161.

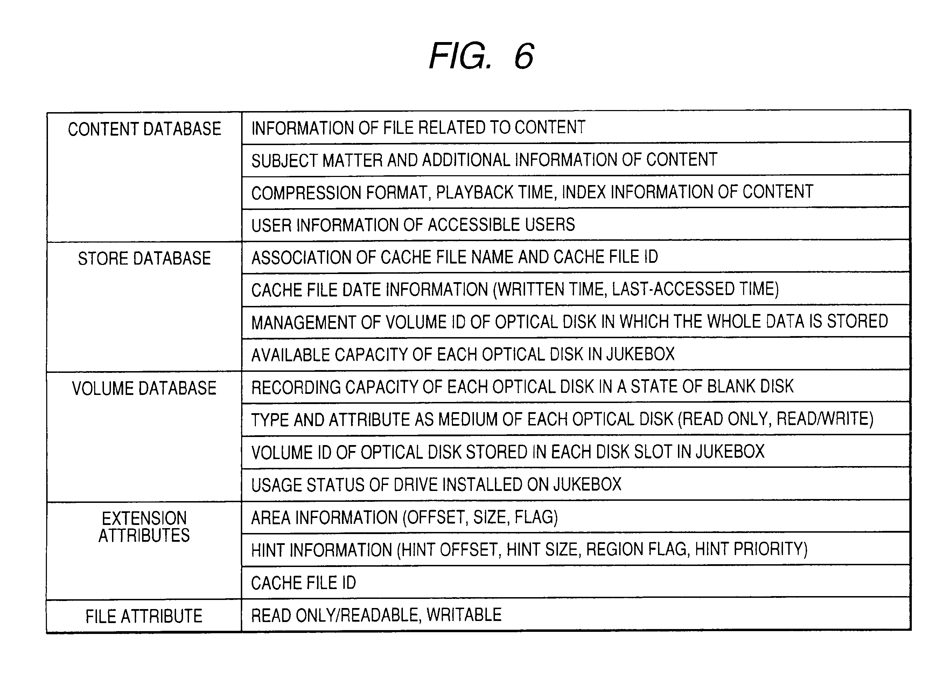

As shown in Fig. 6, information concerning content is recorded in the content database 161 such as information of a file related to content (for example, a file name, a path name and so on), subject matter and additional information of content (for example, a content name, a category of content and so on), a compression format (system), playback time and index information (for example, positions of the indexes in content and so on) of content, and user information of accessible users (for example, an user name, a password and so on).

Also, in the content database 161, an access history table is recorded. The access history table stores information concerning the access history with respect to the predetermined numbers of contents which have been recently accessed. For example, the access history table stores information concerning the access history with respect to 100 contents which have been recently accessed respectively.

The number of contents corresponding to information stored in the access history table can be arbitrary numbers. For example, the number of contents is determined by initialization. The number of contents corresponding to information stored in the access history table can be dynamically changed during operation of the recording and playback system 101.

More specifically, the access history table stores information concerning the access history with respect to each content, which are a path name of a content file, a creation date and time showing a date and time when the content file was created, a latest update date and time showing a date and time when the content file was last-updated, a latest access date and time showing a date and time when the content file was last-accessed, a file size showing a size of the content file and the like.

The content manager 142, when accessed to content whose information concerning access history is not stored in the access history table, generates information concerning access history with respect to the accessed content and stores the generated information in the access history table. For example, when a content is recorded in the recording and playback system 101, the content manager 142 generates information concerning access history with respect to the recorded content, and stores the generated information in the access history table.

The content manager 142, when the content is accessed (content data is read out), updates information stored in the access history table.

The storage manager 114 controls the HSM 113 from an upper position thereof. Namely, the storage manager 114 controls the HSM 113 based on a request from the application program 141. A system manager 162 and a file I/O manager 163 are provided at the storage manager 114.

The system manager 162 sets a system relevant to storage control, records a system log, manages an error log and executes maintenance process. The file I/O manager 163 receives a request for reading or writing of the file from the application program 141. The file I/O manager 163 instructs conversion of the content file recorded in the HDD 116 into a stub file (state) in which, for example, a designated part of data which is a part of a video content or a music content is stored as stub-data. The file I/O manager 163 instructs an interruption or a restart of the process of reading data (later-described reload) from the optical disk 119 to the HDD 116. Further, the file I/O manager 163 instructs the interruption or the restart of the process of writing data from the HDD 116 to the optical disk 119.

The HSM 113 allows the HDD 116, the drive 118, the optical disk 119, the juke system 120, the disk slot 121 and the picker 122 to be virtual storage, and controls the temporary recording of content data by the HDD 116. The HSM 113 includes a migration file system 164, a storage server 165, a store database (DB) 166, a media server 167 and a volume database (DB) 168.

The migration file system 164 manages extension attributes of files managed by the HSM 113, rewriting the extension attributes. The migration file system 164 manages an access event with respect to files managed by the HSM 113. The migration file system 164 also controls the process of reading data from the optical disk 119 to the HDD 116 and controls the process of writing data from the HDD 116 to the optical disk 119.

The storage server 165 reads data from the optical disk 119 to the HDD 116, or writes data from the HDD 116 to the optical disk 119. The storage server 165 also manages the recording of information concerning a cache file for storing content data which is stored in the HDD 116 in the store database 166 and the reading of information concerning the cache file from the store database 166. Further, the storage server 165 manages link information between the whole content data and the optical disk 119 in which the data is recorded.

The store database 166 records information concerning the cache file for storing content data, which is stored in the HDD 116.

As shown in Fig. 6, the store database 166 stores association of a cache file name recorded in the HDD 116 and a cache file ID which is a value for specifying the cache file. The store database 166 also records cache file date information indicating time when the cache file was written or time when the cache file was last-accessed and a volume ID which identifies the optical disk 119 in which the whole data is stored. The store database 166 further records available capacity of each optical disk 119 in a jukebox 145.

The media server 167 manages the optical disks 119 respectively stored in the disk slot 121. The media server 167 requests a changer driver 143 to mount a designated optical disk 119 on the drive 118. The media server 167 also requests the changer driver 143 to store (unmount) the optical disk 119 mounted on the drive 118 into the disk slot 121.

The volume database 168 provided in the media server 167 stores information concerning the optical disk 119.

As shown in Fig. 6, the volume database 168 records recording capacity of each optical disk 119 in a state of a blank disk, a type of each optical disk 119 (MO (Magneto-Optical disk), DVD (Digital Versatile Disc)+R, DVD+RW or the like), and an attribute which represents "write only", "readable and writable" and the like, as a medium. The volume database 168 also records a volume ID of optical disk 119 stored in each disk slot 121 in the jukebox 145 and usage status of the drive 118 installed on the jukebox 145.

The changer driver 143 controls the drive 118 and has a function as an interface between the jukebox 145 and the HSM 113.

A jukebox control unit 144 includes the juke system 120 and a juke servo 169. The juke system 120 controls a system having the drive 118, the optical disks 119, the disk slots 121, and the picker 122 (jukebox 145). The juke servo 169 drives the jukebox 145.

The jukebox 145 includes the drive 118, the optical disks 119, the disk slots 121, and the picker 122.

It is also preferable that data recorded in the content database 161, the store database 166 and the volume database 168 respectively are recorded into one database.

Additionally, as shown in Fig. 6, as extension attributes of the content, area information concerning parts of the content in the cache file, hint information indicating a hint about which part of the content is recorded in the HDD 116 as a cache file, and a cache file ID are recorded in the migration file system 164.

As the extension attribute of content, information indicating whether a migration process concerning the cache file has been interrupted is recorded in the migration file system 164. For example, information indicating whether the migration process has been interrupted is represented as a flag, specifically, a flag "1" indicates that the migration process concerning the cache file has been interrupted, and a flag "0" indicates that the migration process concerning the cache file has been completed. The migration process is interrupted in the case that cancellation is requested by the user, the case that an access process to another content is started, or the case that recording of the content is started.

The extension attributes of the content can be recorded or read out by a file system of an operation system, or can be recorded in the content database 161.

In more details, the area information includes an offset indicating an offset value (byte) concerning a part of the content in a cache file from the head of content data to the head of the part, a size indicating an amount of data of the part of the content and a flag indicating whether the part of content has been stored or in a hole state, the details of which will be described later. The hint information indicates a hint about which part of the content is recorded in the HDD 116 as a cache file, having a hint offset indicating an offset value (byte) from the head of the content data to the head of the part, a hint size indicating an amount of data of the part of the content, a region flag indicating an attribute of the part, the details of which will be described later and a hint priority indicating the order of priority when the part is migrated.

Furthermore, as shown in Fig. 6, as the attribute of a file for storing the content, information indicating "read only" or "readable and writable" is recorded by the file system.

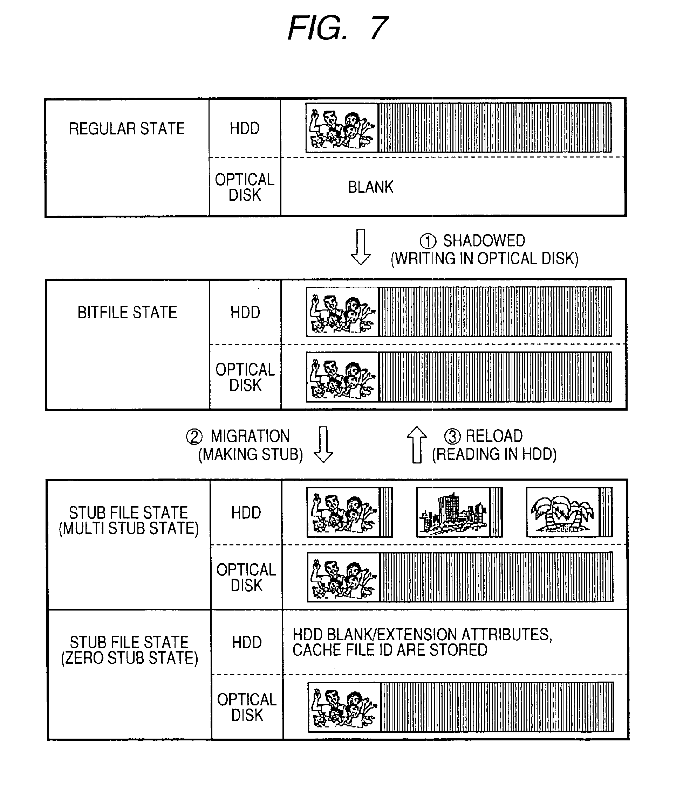

Next, with reference to Fig. 7 to Fig. 9, a cache file recorded in the HDD 116 and the reading of content data using the cache file will be explained.

Fig. 7 is a diagram explaining states of cache files recorded in the HDD 116. A stream (content) which has been encoded by the video/audio encoder 111 and multiplexed by the stream encoder 112 is written in (a cache area) of the HDD 16 as a cache file. As shown in Fig. 7, a state of the cache file in which the whole data of the inputted stream (content) is recorded is called as a regular state.

By "shadowed" operation in which the regular-state cache file recorded in the HDD 116 is written in the optical disk 119, which is executed during available time of the jukebox 145, the whole content is recorded not only in the HDD 116 but also in the optical disk 119. A state of the cache file in the case that the whole content data is recorded both in the HDD 116 and the optical disk 119 is called as a bitfile state.

In the case that the cache file is in the regular state or in the bitfile state, in other words, when the whole stream, namely, the whole content data is recorded in the HDD 116, the whole content data is read from the HDD 116, therefore, it is possible to read the content data rapidly. However, in the case that the cache file is in the regular state or the bitfile state, since the data amount of the cache file is large, a usage amount of the recording area of the HDD 116 increases when cache files of a large number of contents in the regular state or in the bitfile state are recorded in the HDD116, as a result, the HDD 116 is filled up shortly (the HDD 116 becomes in a state that data is recorded in the whole recording area thereof).

Then, for example, the whole content data is recorded in the optical disk 119 in the order of oldest cache file by referring to elapsed time since the cache file was recorded in the HDD 116, thereby making the data amount of cache files recorded in the HDD 116 small, and the total amount of data of cache files recorded in the HDD 116 can be fit into a fixed range.

As shown in Fig. 7, a state of the cache file in which the whole content data is not recorded but a designated part of content data is recorded is called as a stub file state. Especially, a state of the cache file in which plural designated parts of content data are recorded is called as a multi stub state. A state in which the whole content data is not included and only extension attributes of the content and the cache file ID are recorded in the HDD 116 is called as a zero-stub state exceptionally.

To read content data from the optical disk 119 in which the whole content data is recorded and to record the read data in the HDD 116 is called as "reload". For example, it is possible to read content data from the optical disk 119 and to record the whole content data in the HDD 116.

As described above, data corresponding to the input video signal and the audio signal acquired from the application program 141 is recorded in the HDD 116, further, data recorded in the HDD 116 is recorded in the optical disk 119 mounted on the drive 118.

In the case of reading this data, data is read either from the HDD 116, or from the mounted optical disk 119 by the drive 118. The data which has been read from the optical disk 119 by the drive 118 is recorded in the HDD 116 once, then, read from the HDD 116 by the application program 141.

More specifically, in the case of reading data, the data is read from the optical disk 119 mounted on the drive 118 by the drive 118, then, temporarily stored in the buffer 117. The data which has been temporarily stored in the buffer 117 is supplied to the HDD 116 and recorded by the HDD 116.

The data previously recorded in the HDD 116 (data of a later-described stub area) is read out into the buffer 115 and temporarily stored in the buffer 115. Similarly, the data read from the optical disk 119 through the buffer 117 in response to a request of reading data and recorded in the HDD 116 (data of a later-described hole area) is also read into the buffer 115 and temporarily stored in the buffer 115.

The application program 141 reads the data which has been temporarily stored in the buffer 115 and outputs an output video signal and an audio signal.

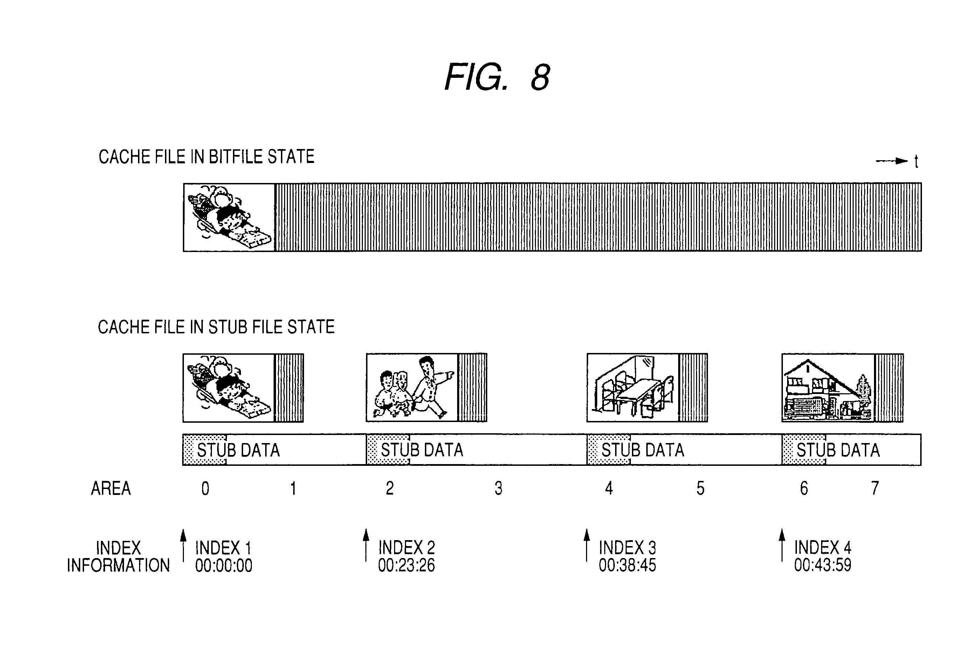

Fig. 8 is a diagram explaining a cache file in the stub state. In Fig. 8, a cache file in the bitfile state is shown for comparison. As shown in Fig. 8, in the cache file in the bitfile state, the whole content data is stored, and in the cache file in the stub state, parts of content data are stored.

For example, in the cache file in the stub state, parts of content data at positions corresponding to indexes indicated by index information are stored. In the case that index information indicates an index 1 at a start position of the content, an index 2 at a position where 23 minutes and 26 seconds have passed from the start of the content, an index 3 where 38 minutes and 45 seconds have passed from the start of the content and an index 4 where 43 minutes and 59 seconds have passed from the start of the content, data of the part of the content for a designated period at the start position of content, data of the part of the content for a designated period at the position where 23 minutes and 26 seconds have passed from the start of the content, data of the part of content for a designated period at the position where 38 minutes and 45 seconds have passed from the start of the content and data of the part of the content for a designated period at the position where 43 minutes and 59 seconds have passed from the start of the content are stored in the cache file as stub data.

The length of time of the content reproduced by the stub data is longer than time required until the optical disk 119 stored in the disk slot 121 is removed from the disk slot 121 and mounted on the drive 118, then, the drive 118 reads content data from the optical disk 119 mounted thereon, namely, it is, for example, approximately 20 seconds long to 30 seconds long.

Here, "stub" means a part of a content corresponding to data recorded in cache space of the HDD 116 as a cache file. The "stub area" means an area on the content in which the stub data is recorded in the HDD 116, namely, the area of "stub". A "hole area" means an area on the content in which the stub data is not recorded.

In the case of not distinguishing the stub area and the hole area, it is called as merely an area. In Fig. 8, data (stub data) of an area which is the stub area indicated by "0", which corresponds to the index 1 is recorded in the HDD 116 as a cache file, and data of an area which is the hole area indicated by "1" between the index 1 and index 2 is not recorded in the HDD 116. Similarly, data (stub data) of an area which is the stub area indicated by "2", which corresponds to the index 2, data (stub data) of an area which is the stub area indicated by "4", which corresponds to the index 3, and data (stub data) of an area which is the stub area indicated by "6", which corresponds to the index 4 are recorded in the HDD 116 as the cache file. On the other hand, data of an area which is the hole area indicated by "3" between the index 2 and the index 3, data of an area which is the hole area indicated by "5" between the index 3 and the index 4 and data of an area which is the hole area indicated by "7" after the index 4 are not recorded in the HDD 116.

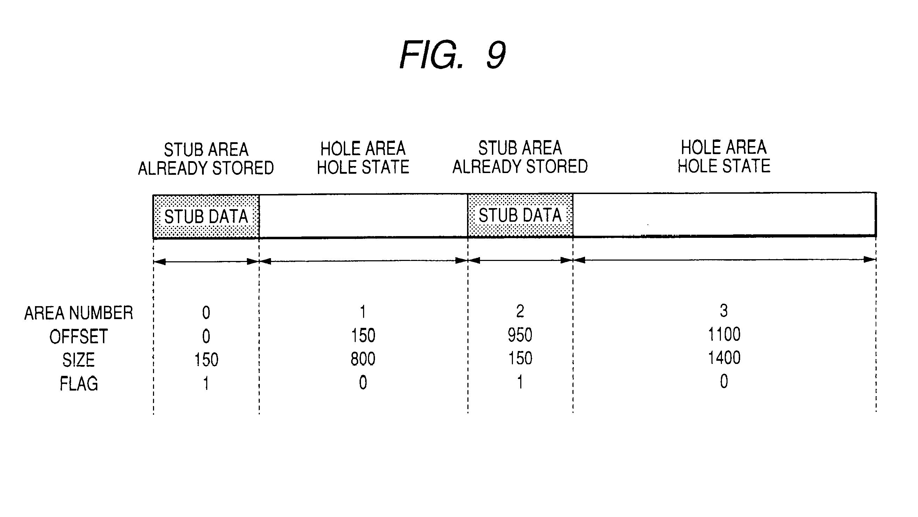

Referring to Fig. 9, the area information of areas and extension attributes will be explained. In an example shown in Fig. 9, the stub area is arranged at the head of content data, and the hole area is arranged, following the stub area. Then, the stub area is arranged, following the hole area, and further, the hole area is arranged, following the stub area. In other words, the stub data which is the data at the head part of the content is recorded (has been already stored) in the cache file of the HDD 116, and the designated length of data, which follows that head part of the content is not recorded (made to be the hole state) in the cache file in the HDD 116. In addition, the stub data which is data of a designated part of the content, which follows the data of the hole state is recorded (has been already stored) in the cache file of the HDD 116, and the designated length of data, which follows that part is not recorded (made to be the hole state) in the cache file of the HDD 116. That is, the area in which the part of content data is recorded in the cache file of the HDD 116 and the area in which it is not recorded are arranged alternately.

The area information includes an area number, an offset, a size, and a flag, respectively. The area number takes sequential values of "0" to "N" (integers) from the head of the file. Namely, the area numbers are integral serial numbers which are added to respective areas from the head of content data in sequence, setting "0" as an initial value. The offset indicates an offset value from the head of the file (the head of content data) to the head of the area. The offset uses, for example, byte as a unit. The size indicates an amount of data in the area. The size uses, for example, byte as a unit. The flag indicates whether it is the stub area (already stored) or the hole area (hole state), for example, a flag "1" indicates that it is the stub area (already stored) and a flag "0" indicates that it is the hole area (hole state).

For example, the stub area at the head of content data is positioned at the head of content data, an amount of data of the area is 150 bytes. Since it is the stub area (already stored), the area number of "0", the offset of "0", the size of "150" and the flag of "1" are added in the stub area at the head of content data. In the second area from the head of content data, an original amount of data at the area is 800 bytes. Since it is the hole area (hole state), the area number of "1", the offset of "150", the size of "800" and the flag of "0" are added in the area.

Similarly, in the third area from the head of content data, an amount of data in the area is 150 bytes, and since it is the stub area (already stored), the area number of "2", the offset of "950 (150+800)" the size of "150", the flag of "1" are added in the area. In the forth area from the head of content data, an original amount of data in the area is 1400 bytes, and since it is the hole area (hole state), the area number of "3", the offset of "1100 (950+150)", the size of "1400" and the flag of "0" are added in the area.

As described above, area information in the extension attributes of the content indicates the state of respective areas in the cache file. By referring to the area information, the state of the area in the cache file can be known.

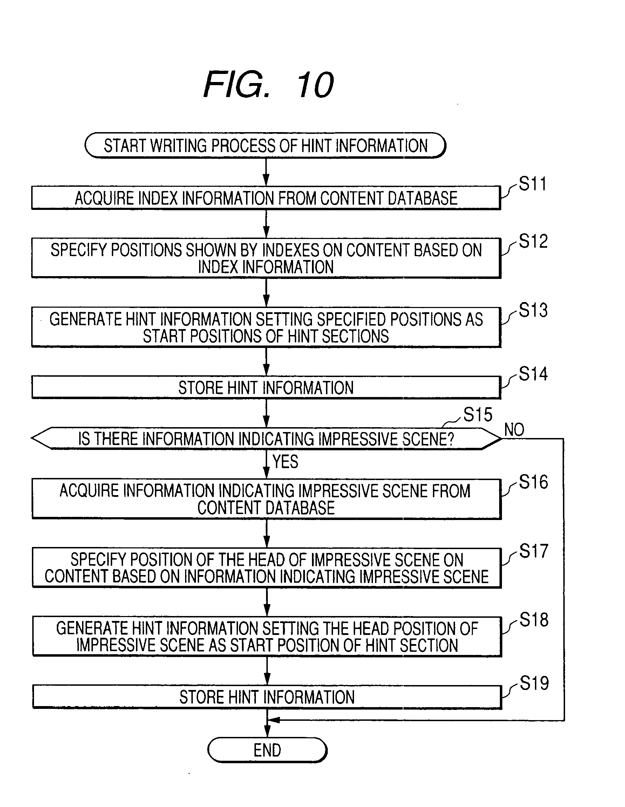

Next, a writing process of hint information will be explained with reference to a flowchart of Fig. 10. In step S11, the application program 141 acquires index information indicating positions of indexes in the content from the content database 161 through the content manager 142. In step S12, the application program 141 specifies positions on the content indicated by the indexes based on the index information.

In step S13, the application program 141 generates hint information which sets the specified positions as start positions of hint sections. The hint sections are parts of the content (ranges) indicated by hint information.

The hint information is information indicating a hint about which parts of the content are recorded in the HDD 116 as the cache file. By adding hint information to the content (content data), data of arbitrary parts in content data can be recorded as the stub data in the cache area of the HDD 116. That is, data of parts indicated by the hint information in content data is stored in the cache file as the stub data and recorded in the HDD 116. Also, by referring to hint information, it is possible to execute a staged migration process.

The hint information includes a version number, a hint section length, a hint offset, a hint size, a region flag, a hint priority and a time stamp. In one hint information, one version number and one hint section length are arranged. In one hint information, the hint offset, the hint size, the region flag, the hint priority and the time stamp according to the number of hint sections are arranged. Namely, one group of the hint offset, the hint size, the region flag, the hint priority and the time stamp indicates information of one area.

The version number indicates a version of the hint information, used for maintaining compatibility of the system and software. The hint section length indicates the total amount of data of all hint sections shown by the hint information. If an amount of data of one hint section is fixed, the number of hint sections can be found by dividing the hint section length by the amount of data of one hint section.

The hint offset indicates a start position of each hint section by an offset from the head of content data. For example, the unit of the hint offset is an amount of data (byte, etc). The hint size indicates an amount of data of the hint section. As the unit of the hint size, for example, byte is used.

The region flag indicates an attribute such as whether each hint section corresponds to the index, whether it corresponds to an impressive scene, or whether it corresponds to an important scene. The operating system and the like can generate an event according to an access by referring to the region flag.

The hint priority indicates the order of priority in the case of migrating each hint section. When a value of the hint priority is larger, a part of data corresponding to the hint section tends to be migrated. In the case that "0" is set in the hint priority, a part of data corresponding to the hint section is cached in the HDD 116 which is the primary storage until the content is deleted from the recording and playback system 101. The value of the hint priority can be managed by the application program 141 or the operating system in a manner such that the hint priority in the hint section corresponding to a part of the content (data) which is frequently accessed is set to be "0".

The time stamp indicates a date and time when the part of the content (data) corresponding to the hint section was last-accessed. The time stamp is set by the application program 141 or the operating system.

For example, the application program 141 sets a previously specified value as the version number.

For example, the application program 141 finds, based on a position on the content which is the time on the playback of the content which has been specified by the process of S12, an amount of data from the head of content data to the position. The application program 141 sets the amount of data as the hint offset. The application program 141 also sets, for example, a previously specified value as the hint size. Further, for example, the application program 141 sets a predetermined value as the region flag, which indicates the correspondence to the index.

Furthermore, the application program 141 sets a predetermined value as the hint priority. For example, the application program 141 sets a value "0" to the first index of the content, and sets a value "1" to other indexes as the hint priority. The application program 141 sets a date and time when last-accessed as the time stamp.

Additionally, the application program 141 sets a value obtained by multiplying the number of hint sections and the hint size as the hint section length.

The application program 141 generates hint information by arranging the version number, the hint section length, the hint offset, the hint size, the region flag, the hint priority and the time stamp which are generated as the above in the predetermined order.

In step S14, the application program 141 stores hint information in the extension attributes of the content recorded in the migration file system 164 of the HSM 113 through the storage manager 114.

In step S15, the application program 141 judges whether there is information indicating an impressive scene in the content database 161 based on a result of inquiring of the content manager 142. In step S15, when judged that there is information indicating the impressive scene, the procedure proceeds to step S16, and the application program 141 acquires information indicating the impressive scene from the content database 161 through the content manager 142.

In step S17, the application program 141 specifies a position of the head of the impressive scene on the content based on information indicating the impressive scene. For example, the application program 141 specifies the position of the head of the impressive scene which is designated by the time in the playback of the content, based on information indicating the impressive scene.

In step S18, the application program 114 generates hint information which sets the head position of the impressive scene as a start position of the hint section. In step S19, the application program 141 stores hint information in the extension attributes of the content recorded in the migration file system 164 of the HSM 113 through the storage manager 114, and the process ends.

In step S15, when judged that there is not information indicating the impressive scene, processes from step S16 to step S19 are skipped and the process ends.

As described above, hint information is generated and recorded based on index information and information indicating the impressive scene.

The staged migration process can be executed by referring to the hint information thus recorded.

It is also preferable that a value corresponding to operation by the user is directly set in hint information, and that the hint information is written by other programs such as the operating system, not limited to the application program 141.

Next, the migration process will be explained with reference to flow charts of Fig. 11 to Fig. 13. In step S31, the storage manager 114 sets an anchor point which is a directory where scanning of the file recorded in the HDD 116 is started. In the process of step S31 which is executed first from the start of migration process, the storage manager 114 sets an anchor point which is a previously specified directory (for example, a root directory). In processes of step S41, step S53, or step S60 which will be described later, when it is judged that the data amount of the cache files recorded in the HDD 116 has become less than the lower threshold and the process returns to step S31, the storage manager 114 sets an anchor point so that a directory which has been focused in the process before that, or a directory in which a file which has been a target of the process before that is stored is allowed to be a directory where the scanning of the file is started.

The storage manager 114 executes a loop control of a space guard process so as to execute processes of step S33 to step S64 with respect to the set anchor point at step S32 and step S65.

In step S33, the storage manager 114 executes a wait process, waiting for a predetermined period. In step S34, the storage manager 114 acquires the data amount of the cache files recorded in the HDD 116 from the HSM 113 and judges whether the data amount of the cache files recorded in the HDD 116 exceeds the upper threshold or not. In step S34, when it is judged that the data amount does not exceed the upper threshold, it is not necessary to reduce the data amount of the cache files recorded in the HDD 116, therefore, the process returns to step S33, and the process of waiting for the predetermined period and the process of judgment whether the data amount of the cache files recorded in the HDD 116 exceeds the upper threshold or not are repeated.

In step S34, when it is judged that the data amount exceeds the upper threshold, the process proceed to step S35, where the storage manager 114 moves to the anchor point which has been set in the process of step S31. That is, in step S35, the storage manager 114 moves to a directory (specifies a directory) which is the anchor point by, for example, setting a path showing a directory which is the anchor point.

In step S36, the storage manager 114 sets a predetermined initial value as a migration level "n". For example, in step S36, the storage manager 114 sets "8" which is the initial value as the migration level "n". The migration level "n" is a standard for determining whether a part of content data is cached or not, the details of which will be described later.

It is also preferable that the storage manager 114 stores a migration level "n" used in the process of generating the cache file in the stub file state as later-described step S40, and that sets the migration level "n" as the initial value, which has been used in the process of generating the cache file in the stub file state in a previous turn.

The storage manager 114, in step S37 and step S44, executes the loop control process of a target directory operation so as to scan the cache file in the order from the anchor point and execute the processes from step S39 to step S43 based on the scanned cache files.

In step S38, the storage manager 114 acquires a directory structure and file names of the files stored in respective directories from a file system of the operating system. Then, in step S38, the storage manager 114 specifies the cache file in the stub file state to be a process target from the currently-focused directory based on the acquired directory structure and file names. For example, in the process of step S38 which is executed first after the loop control process of the target directory operation in step S37 and step S44 is executed, the cache file in the stub file state to be the process target is specified based on the directory set as the anchor point. In step S43 which will be described later, in the process of S38 which is executed after moved to a next directory, the cache file in the stub file state to be the process target is specified based on the directory after moved.

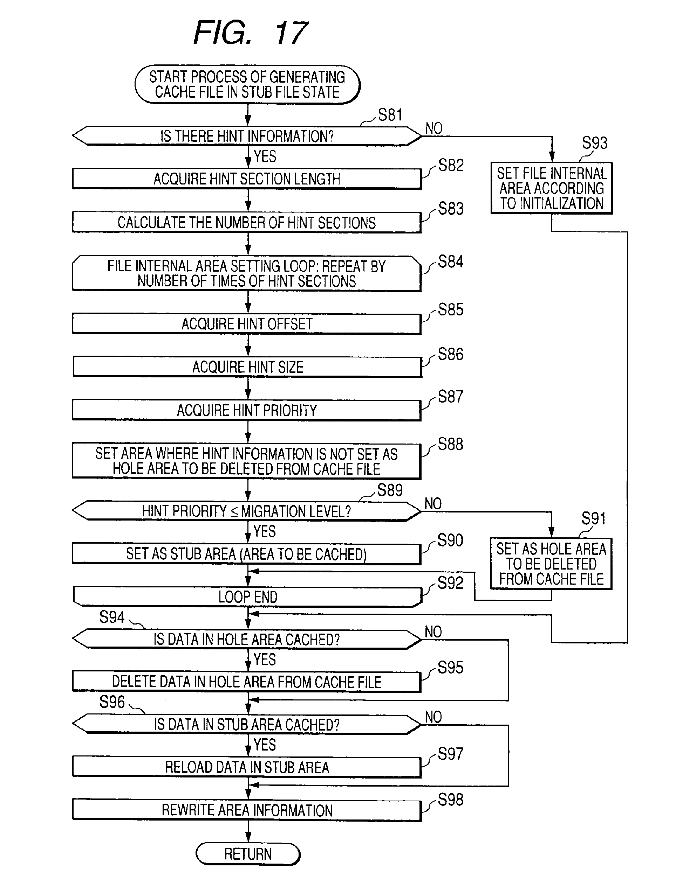

In step S39, the storage manager 114 judges whether the possibility that the specified cache file is accessed in a few days is high or not, and when it is judged that the possibility that the specified cache file is accessed in a few days is not high, the process proceeds to step S40, where the process of generating the cache file in the stub file state is applied to the specified cache file, and data of a predetermined part of the content is deleted from the cache file. When data of the predetermined part of the content is deleted from the cache file, the data amount of data stored in the HDD 116 is reduced. The details of the process of generating the cache file in the stub file state will be described later with reference to a flow chart of Fig. 17. After the process of step S40, the procedure proceeds to step S41.

For example, in step S39, the storage manager 141 reads information concerning the access history with respect to the specified cache file from the access history table of the content database 161, then, judges whether the possibility that the specified cache file is accessed in a few days is high or not, based on the read information concerning access history. More specifically, it is highly likely that data which has been accessed once is accessed again, therefore, in the case that a period from the date and time when the file of the content was last-accessed which is shown by the latest access date and time until the current date and time is shorter than a predetermined threshold, the storage manager 114 judges that the possibility that the specified cache file is accessed in a few days is high, and in the case that the period from the date and time when last-accessed until the current date and time is longer than the predetermined threshold, the storage manager 114 judges that the possibility that the specified cache file is accessed in a few days is not high.

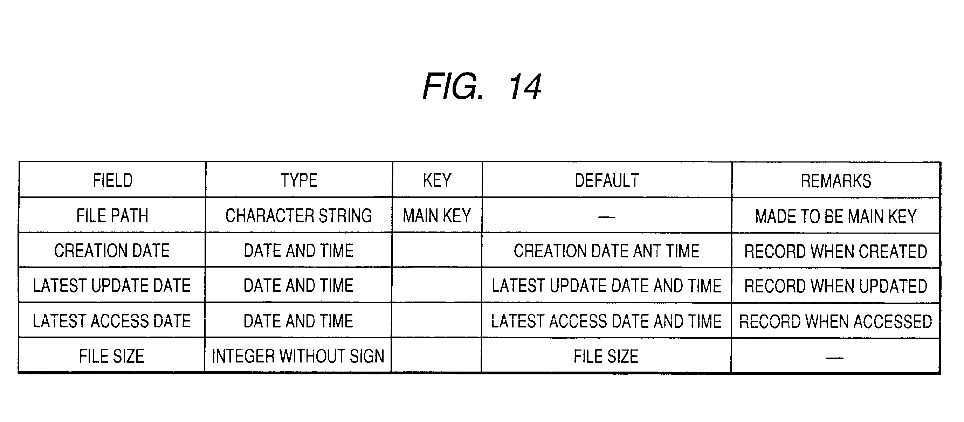

Fig. 14 is a table showing an example of the access history table recorded in the content database 161. In Fig. 14, information concerning the access history with respect to one content in information concerning the access histories stored in the access history table is shown.

In Fig. 14, a left first column shows field names, a second column from the left shows types of information of respective fields. A third column from the left shows whether respective fields are used for a search key or not, and a fourth column from the left shows the default of respective fields. A right-side column shows remarks about respective fields.

In the access history table, fields of a file path, a creation date and time, a latest update date, a latest access date and a file size are provided. The field of the file path stores a path name indicating a path to a file in which each content data is stored. The field of the creation date and time stores information indicating a date and time when the file of the content was created. The field of the latest update date stores information indicating a date and time when the file of the content was last-updated. The field of the latest access date stores information indicating a date and time when the files of the content was last-accessed. The field of the file size stores information indicating the data amount of the content data respectively.

The type of the path name stored in the field of the file path is a character string, the type of information stored in the field of the creation date and time is a date and time, the type of information stored in the field of the latest update date is a date and time, and the type of information stored in the field of the latest access date is a date and time. The type of information stored in the field of the file size is an integer without sign.

The path name stored in the field of the file path is a main key, which is used as ID for specifying the file.

The default of information stored in the field of the creation date and time is a creation date and time, and information stored in the field of the creation date and time is recorded in the access history table when the file is created. The default of information stored in the field of the latest update date is a latest update date and time and information stored in the field of the latest update date and time is recorded (updated) in the access history table when the file is updated.

The default of information stored in the field of the latest access date is a latest access date and time and information stored in the field of the latest access date is recorded (updated) in the access history table when the (data of) file is accessed. The default of information stored in the field of the file size is a file size.

For example, in step S39, the storage manager 114 reads history information about the specified cache file, that is, information stored in the field of the latest access date from the access history table of the content database 161, and judges whether the possibility that the specified cache file is accessed in a few days is high or not based on information indicating the date and time when the file of content was last-accessed.

In step S39, when it is judged that the possibility that the specified cache file is accessed in a few days is high, the process of step S40 is skipped and the procedure proceeds to step S41.

In step S41, the storage manager 141 acquires the data amount of the cache files recorded in the HDD 116 from the HSM 113 and judges whether the data amount of the cache files stored in the HDD 116 has become less than the lower threshold or not, and when it is judged that the data amount has not become less than the lower threshold, it is necessary to further reduce the data amount of the cache file, therefore, the procedure proceeds to step S42. The lower threshold is a smaller value than the upper threshold.

In step S42, the storage manager 114 judges whether all cache files in the currently-focused directory have been specified or not, and in the case that it is judged that all cache files have been specified, the procedure proceeds to step S43, and moves to a next directory to be the scanning target according to scanning procedures.

In step S42, in the case it is judged that all cache files in the currently-focused directory have not been specified, there are still cache files having possibility of deleting data, therefore, the process of step S43 is skipped, and the procedure proceed to the step S44.

In step S41, in the case that it is judged that the data amount has become the lower threshold, it is not necessary to reduce the data amount of the cache file any further, therefore, the process returns to step S31, and the above processes are repeated.

When all cache files recorded in the HDD 116 are scanned by the processes of step S37 and step S44 and the processes of step S39 and step S40 are applied to the scanned cache files, the process escapes from the loop process of the step S37 and the step S44, proceeding to step S45.

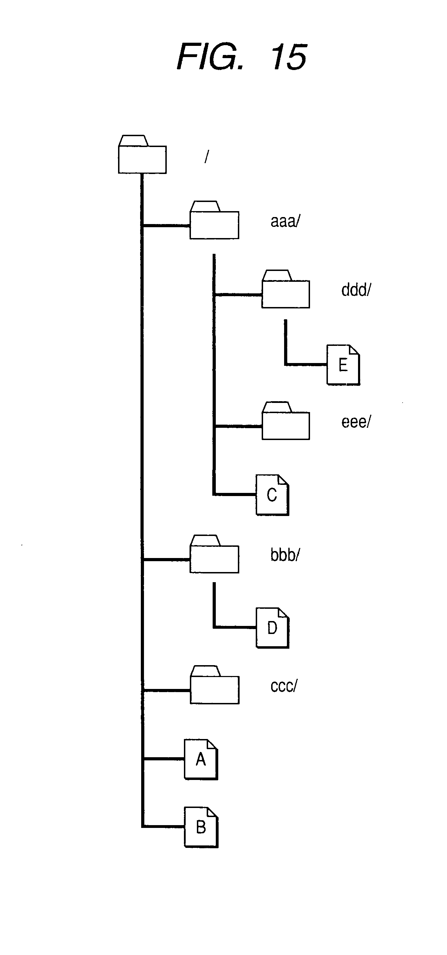

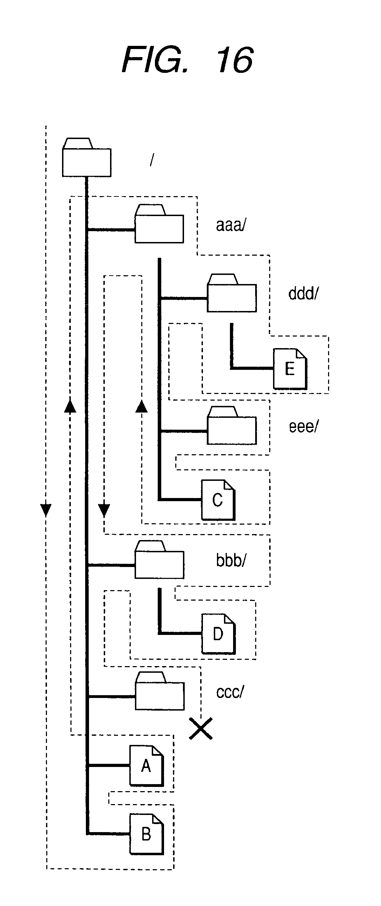

Specific examples of scanning directories and specifying cache files in the process of step S38 and step S43 will be explained with reference to Fig. 15 and Fig. 16. For example, the scanning of directories and the search (specifying) of cache files can be made by methods such as pre-order traversal, in-order traversal or post-order traversal.

Fig. 15 is a view showing a directory structure. A directory of the highest part in Fig. 15 which is denoted by "/" is a root directory. The root directory is the highest directory among directories in which cache files are stored.

A directory denoted by "aaa/", a directory denoted by "bbb/" and a directory denoted by "ccc/" are arranged at the root directory. The root directory stores a file "A" and a file "B".

A directory denoted by "ddd/" and a directory denoted by "eee/" are arranged at the directory denoted by "aaa/". The directory denoted by "aaa/" stores a file "C".

The directory denoted by "bbb/" stores a file "D". The directory denoted by "ccc/" does not store any file.

A directory denoted by "ddd/" stores a file "E". The directory denoted by "eee/" does not store any file.

Fig. 16 is a view showing an example of the scanning by the pre-order traversal. In the method of pre-order traversal, a file stored in a directory which is currently focused is scanned (specified), then, a child directory of the focused directory in pre-order.

Specifically, in the pre-order traversal method, first, the file stored in the currently-focused directory is searched (specified). Next, the child directory of the focused directory is focused in pre-order. With respect to the focused child directory, a file is searched recursively in the pre-order traversal method, and further, a child directory of the child directory is focused in pre-order.

Accordingly, as shown in Fig. 16, when the root directory is focused at first, the file "A" and the file "B" which belong to the root directory are searched. Next, the directory denoted by "aaa/" which is the first child directory of the root directory is focused (scanned), then, the file "C" stored in the directory denoted by "aaa/" is searched.

Next, the directory denoted by "ddd/" which is the first child directory of the directory denoted by "aaa/" is focused (scanned), and the file "E" stored in the directory denoted by "ddd/" is searched. Then, the directory denoted by "eee/" which is the second (last) child directory of the directory denoted by "aaa/" is focused. Since all child directories of the directory denoted by "aaa/" have been focused, next, the directory denoted by "bbb/" which is the second child directory of the root directory is focused. Then, the file "D" stored in the directory denoted by "bbb/" is searched.

Furthermore, the directory denoted by "ccc/" which is the last child directory of the root directory is focused. No file is stored in the directory denoted by "ccc/". Since all child directories of the root directory have been focused, the process ends.

Accordingly, in the pre-order traversal method, the file "A", the file "B", the file "C", the file "E" and the file "D" are searched (specified) in pre-order.

In the in-order traversal method, a child directory of a currently-focused directory is scanned in order, a file stored in the focused directory is searched (specified) in the process of scanning.

Specifically, in the in-order traversal method, the directory denoted by "aaa/" which is the first child directory of the root directory is focused, and further, the directory denoted by "ddd/" which is the first child directory of the directory denoted by "aaa/" is focused. Since there is no child directory in the directory denoted by "ddd/", the file "E" stored in the directory denoted by "ddd/" is searched.

The process returns to the directory denoted by "aaa/", and the file "C" stored in the directory denoted by "aaa/" is searched. The directory denoted by "eee/" which is the last child of the directory denoted by "aaa/" is focused. Since no file is stored in the directory denoted by "eee/", the process returns to the root directory.

Here, the file "A" and the file "B" which belong to the root directory are searched.

Next, the directory denoted by "bbb/" which is the second child directory of the root directory is focused, and since there is no child directory in the directory denoted by "bbb/", the file "D" stored in the directory denoted by "bbb/" is searched.

Then, the directory denoted by "ccc/" which is the last child directory of the root directory is focused. Since all child directories of the root directory have been focused, the process ends.

Accordingly, in the in-order traversal method, the file "E", the file "C", the file "A", the file "B" and the file "D" are searched (specified) in order.

In the post-order traversal method, after a child directory of a currently focused directory is scanned in post-order, a file stored in the focused directory is searched (specified).

Specifically, in the post-order traversal method, the directory denoted by "aaa/" which is the first child directory of the root directory is focused, further, the directory denoted by "ddd/" which is the first child directory of the directory by "aaa/" is focused. Since the directory denoted by "ddd/" does not have any child directory, the file "E" stored in the directory denoted by "ddd/" is searched.

The process returns to the directory denoted by "aaa/", and the directory denoted by "eee/" which is the last child directory of the directory denoted by "aaa/" is focused. Since no file is stored in the directory denoted by "eee/", the process returns to the directory denoted by "aaa/", then, the file "C" stored in the directory denoted by "aaa/" is searched.

Since all child directories of the directory denoted by "aaa/" have been focused and the file "C" stored in the directory denoted by "aaa/" has been searched, next, the directory denoted by "bbb/" which is the second child directory of the root directory is focused. Since there is no child directory at the directory denoted by "bbb/", the file "D" stored in the directory denoted by "bbb/" is searched.

The directory denoted by "ccc/" which is the last child directory of the root directory is focused. Since the directory denoted by "ccc/" does not have any child directory and does not store any file, the file "A" and the file "B" which belong to the root directory are searched, and the process end.

Accordingly, in the post-order traversal method, the file "E", the file "C", the file D", the file "A" and the file "B" are searched (specified) in order.

As described above, according to the processes of step S37 and step S44, all cache files recorded in the HDD 116 have been scanned (searched in order), then, the processes of step S39 and step S40 are applied to the scanned (searched) cache files.

In step S45, the storage manager 114 subtracts "1" from the migration level "n", and sets the result as the migration level "n". That is to say, the migration level "n" is made smaller by "1".

In step S46, the storage manager 114 judges whether the migration level "n" is less than "0" or not. In step S46, when it is judged that the migration level "n" is not less than "0", the process returns to step S37, and the processes from step S37 to step S44 are repeated with respect to the migration level "n" which is "1" smaller than the previous process.

Specifically, in the case that the amount of data of the cache files recorded in the HDD 116 is not still less than the lower threshold even after data of cash file recorded in the HDD 116 is deleted (truncated) based on the predetermined migration level "n", data is further truncated from the cache file based on the migration level "n" which is "1" smaller than the previous process. The truncate process means the process of deleting a part of data of the cache file or the whole data of the cache file from the primary storage.

Accordingly, for example, all cache files recorded in the HDD 116 are scanned, and data is deleted (truncated) from the scanned cache files based on the migration level "n" which is "8" as the initial value. When the amount of data of the cache files recorded in the HDD 116 does not become less than the lower threshold even after data is deleted from the scanned cache files based on the migration level "n" which is "8", all cache files recorded in the HDD 116 are further scanned, data is truncated from the scanned cache files based on the migration level "n" which is "7". Similarly, when the data amount of the cache files recorded in the HDD 116 does not become less than the lower threshold after data is deleted from the scanned cache files based on the migration level "n" which is "7", all cache files recorded in the HDD 116 are further scanned, and data is truncated from the scanned cache files based on the migration level "n" which is "6".

As described above, when the amount of data of the cache files recorded in the HDD 116 does not become less than the lower threshold after data is deleted from the scanned cache file, the process are repeated, in which all cache files recorded in the HDD 116 are scanned and data is truncated from the scanned cache files based on the migration level "n" which is made to be small in value "1" by "1".

In step S46, in the case that the migration level "n" is less than "0", data cannot be deleted any further from the cache files by the process of generating the cache file in the stub file state (truncating process), the process proceeds to step S47, and the storage manager 114 moves to the root directory.

The storage manager 114, in step S48 and step S56, executes the loop control process of the target directory operation so as to scan the cache file in the order from the root directory and apply the processes from step S50 to step S55 to the scanned cache file.

In step S49, the storage manager 114 specifies a cache file to be a process target. For example, in the process of step S49 executed first after the loop control process of the target directory operation in the step S48 and the step S56, a cache file to be the process target is specified based on the root directory. In step S55 which will be described later, in the process of S49 which is executed after moved to a next directory, a cache file to be the process target is specified based on the directory after moved.

In step S50, the storage manager 114 acquires extension attributes of the specified cache file from the migration file system 164.

In step S51, the storage manager 114 judges whether the specified cache file is a cache file in which the migration process has been interrupted or not, and when it is judged that the specified cache file is the cache file in which the migration process has been interrupted, the process proceed to step S52, and the migration process with respect to the specified cache file is started again.

In step S51, when it is judged that the specified cache file is not the cache file in which the migration process has been interrupted, the process of step S52 is skipped and the procedure proceeds to step S53.

In step S53, the storage manager 114 acquires the amount of data of the cache files recorded in the HDD 116 from the HSM 113 and judges whether the amount of data recorded in the HDD 116 has become less than the lower threshold or not. When it is judged that the amount of data has not become less than the lower threshold, the process proceeds to step S54. In step S54, the storage manager 114 judges whether all cache files with respect to the focused directory have been specified or not, and when it is judged that all cache files with respect to the focused directory have been specified, the process proceeds to S55 and the storage manager 114 moves to a next directory to be the scanning target according to the scanning procedure.

In step S54, when it is judged that all cache files with respect to the focused directory have not been specified, there remain cache files with respect to the focused directory, therefore, the process of step S55 is skipped and the process proceeds to step S56.

In step S53, when it is judged that the amount of data has become less than the lower threshold, the process returns to step S31, and the above processes are repeated.

When all cache files recorded in the HDD 116 have been scanned by the step S48 and the step S56, and the processes from step S50 to S52 are applied to the scanned cache files, the process escapes from the loop process of step S48 and step S56, and proceeds to step S57.

In the processes of scanning directories and specifying cache files in processes of step S49 and step S55, for example, the scanning of directories and the search (specifying) of cache files can be made by methods such as pre-order traversal, in order traversal or post-order traversal.

In step S57, the storage manager 114 moves to the root directory.

The storage manager 114 scans cache files in the regular state in the order of the root directory and executes the loop control of the target directory operation so as to apply the migration process to the cache files in the regular state.

In step S59, the storage manager 114 specifies a cache file in the regular state based on the focused directory and applies the migration process to the specified cache file in the regular state. For example, in the process of step S59 which is executed first after the loop control process of the target directory operation in step S58 and step S63, the cache file in the regular state is specified based on the root directory, and the migration process is applied to the specified cache file in the regular state. In later-described step S62, in the process of step S59 which is executed after moved to a next directory, a cache file in the regular state is specified based on the directory after moved and the migration process is applied to the specified cache file in the regular state.

In step S60, the storage manager 114 acquires the amount of data of cache files recorded in the HDD 116 from the HSM 113 and judges whether the amount of data of cache files recorded in the HDD 116 has become less than the lower threshold or not. When it is judged that the amount of data has not become less than the lower threshold, the process proceeds to step S61. In step S61, the storage manager 114 judges whether there is a cache file in the regular state in the focused directory, and when it is judged that there is no cache file in the regular state, the process proceeds to step S62, and moves to a next directory according to the scanning procedure.

In step S61, when it is judged that there is a cache file in the regular state in the focused directory, the process of step S62 is skipped and proceeds to step S63.

In step S60, when it is judged that the amount of data has become less than the lower threshold, the process returns to step S31 and the above processes are repeated.

In the case that the cache files in the regular state have been scanned in the order of the root directory and the migration process has been applied to all the scanned cache files in the regular state by the processes of step S58 and step S63, the procedure escapes from the loop process of step S58 and step S63, and proceeds to step S64.

In the processes of scanning directories and specifying cache files in the regular state to which the migration process is applied in the processes of step S59 and step S62, for example, the scanning of directories and the search (specifying) of the cache file can be made by methods such as pre-order traversal, in order traversal or post-order traversal.

In step S64, the storage manager 114 notifies the application program 141 that there is no file to be the target of migration. For example, the application program 141 displays an image on the monitor 125, which notifying that there is no file to be the target of migration.

After the process of step S64, the process escapes from the loop process of space guard in step S32 and step S65, and the process ends.

As described above, in the case that a part of content data is deleted from the HDD 116, a part of content whose whole data is recorded in the optical disk 119 is deleted from the HDD 116. When the data amount of content data recorded in the HDD 116 does not become less than the lower threshold even after the part of content data whose whole data is recorded in the optical disk 119 is deleted from the HDD 116, with respect to a content in which the process of deleting a part of content data from the HDD 116 was interrupted after the whole content data was recorded in the optical disk 119, the interrupted process is started again, or with respect to a content whose data is not recorded in the optical disk 119, the whole content data is recorded in the optical disk 119, then, a part of content data is deleted from the HDD 116.

The process of deleting a part of content data from the HDD 116 is performed in the order that average processing time is supposed to be short, therefore, it is possible to rapidly create available space in the HDD 116 which is the primary storage.

Fig. 17 is a flowchart explaining the process of generating the cache file in the stub state, which corresponds to step S40 of Fig. 11. In step S81, the storage manager 114 reads extension attributes of the content from the migration file system 164 and judges whether there is hint information in the extension attributes of the content. In step S81, when it is judged that there is hint information, the process proceeds to step S82, where the storage manager 114 reads extension attributes of the content from the migration file system 164 of the HSM 113, and extracts hint information in the read extension attributes. Then, the storage manager 114 acquires the hint section length indicating the total amount of data of all hint sections in hint information.

In step S83, the storage manager 114 calculates the number of hint sections by dividing the hint section length by the amount of data on one hint section.

The storage manager 114, in step S84 and step S92, executes the loop control process so as to execute processes from step S85 to step S91 with respect to respective hint sections and to repeat the processes from step S84 to step S92 by the number of times of hint sections.

In step S85, the storage manager 114 acquires a hint offset indicating a start position of a predetermined hint section based on hint information. In step S86, the storage manager 114 acquires a hint size indicating the amount of data at the hint section based on hint information. In step S87, the storage manager 114 acquires a hint priority indicating the order priority of the hint section based on hint information.

In step S88, the storage manager 114 sets an area where hint information is not set as the hole area to be deleted from the cache file recorded in the HDD 116.

In step S89, the storage manager 114 judges whether the hint priority is less than the migration level "n" which has been set or not. In step S89, when it is judged that the hint priority is less than the migration level "n" which has been set, the process proceeds to step S90, the storage manager 114 sets the hint section where the hint priority is set as a stub area (area to be cached).

On the other hand, when it is judged that the hint priority is not less than the migration level "n", the process proceed to step S91, and the storage manager 114 sets the hint section where the hint priority is set as the hole area to be deleted from the cache file.

The processes from step S85 to step S91 are executed with respect to respective hint sections, and areas including respective hint sections are set as the stub area or the hole area. The area where hint information is not set is set as the hole area.

After the processes from step S84 to step S92 are repeated by the number of times of hint sections, the procedure proceeds to step S44.

In step S81, when it is judged that there is not hint information in extension attributes of the content, the step proceeds to step S93, and the storage manager 114 sets file internal areas according to the initialization. Specifically, in step S93, the storage manager 114 sets areas of the content as the stub area or the hole area according to the initialization, then, the process proceeds to step S94.

In step S94, the storage manager 114 judges whether data in the hole area is recorded in the cache file, namely, data in the hole area is cached or not. When it is judged that the data in the hole area is cached, the process proceed to step S95, and the storage manager 114 instructs the HSM 113 to delete data in the hole area from the cache file. The HSM 113 deletes data in the hole area from the cache file of the HDD 116 based on control of the storage manager 114. After that, the procedure proceeds to step S96.

When it is judged that data in the hole area is not cached in step S94, it is not necessary to execute the process of deleting data from the cache file, therefore, the process of step S95 is skipped and procedure proceeds to step S96.

In step S96, the storage manager 114 judges whether data in the stub area is not recorded in the cache file, namely, whether data in the stub area is not cached or not. When it is judged that data in the stub area is not cached, the process proceeds to step S97, and the storage manager 114 instructs the HSM 113 to reload data of the stub area in the cache file. The HSM 113 allows the optical disk 119 which records the whole content data to mount on the drive 118 based on control of the storage manager 114. The HSM 113 allows the drive 118 to read content data from the optical disk 119, and stores the read content data in the cache file of the HDD 116, thereby reloading data in the stub area. After that, the procedure proceeds to step S98.

In step S96, when it is judged that the data in the stub area is cached, it is not necessary to execute the process of reloading data in the stub area, therefore, the process in step S97 is skipped and the procedure proceeds to step S98.

In step S98, the storage manager 114 instructs the migration file system 164 in the HSM 113 to rewrite area information in extension attributes of the content so as to correspond to results of the deletion of data from the cache file or reload of data to the cache file, then, the process ends.

As described above, the cache file in the stub file state is generated. When the process of generating the cache file in the stub file state based on the migration level "n" is applied to the cache file in the stub file state, the cache file in the stub file state including parts corresponding to hint sections whose hint priority of less than "n" is generated. When the process of generating the cache file in the stub file state based on the migration level "n" which is a smaller value is applied to the cache file in the stub file state, stub data is deleted from the cache file, therefore, the data amount of the cache file is further reduced.

Next, a process of reading content data using the cache file in the stub file state which has been thus generated will be explained.

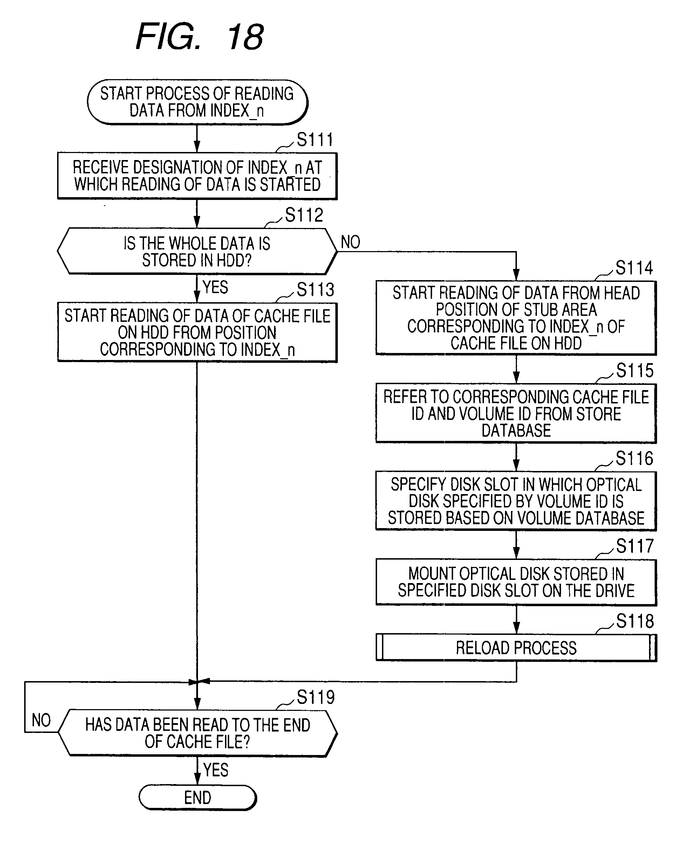

Fig. 18 is a flowchart explaining the process of reading data from an index_n. In step S111, the file I/O manager 163 in the storage manager 114 receives the designation of the index_n at which reading of data is started. More specifically, the application program 141 receives the selection of the index at which playback is started in response to operation by the user. The application program 141 supplies data to the I/O manager 163, which designates the index selected by the user, at which playback is started. The file I/O manager 163 acquires data from the application program 141, thereby receiving the designation of an index_n at which reading is started, which has been selected by the user. The storage manager 114 instructs the playback from the index_n to the HSM 113.

In step S112, the storage manager 114 judges, based on area information stored in the migration file system 164 of the HSM 113, whether the whole content data which has been instructed to be read is recorded in the HDD 116 as the cache file, that is, whether the whole content data which has been instructed to be read is stored in the HDD 116. In step S112, when it is judged that the whole data is stored in the HDD 116, the process proceeds to step S113, where the storage manager 114 instructs the HSM 113 to read content data from a position corresponding to the index_n. The HSM 113 makes the HDD 116 read data of the cache file from the position corresponding to the index_n. After the process of step S113, the procedure proceeds to step S119.

On the other hand, in step S112, when it is judged that the whole data is not stored in the HDD 116, the process proceeds to step S114, and the storage manager 114 instructs the HSM 113 to read content data from the position corresponding to the index_n. The HSM 113 makes the HDD 116 read data from the head position of the stub area corresponding to the index_n of the cache file in the HDD 116.

Accordingly, content will be reproduced immediately.

The storage manager 114 issues a reload command to the HSM 113, which is a reading request of corresponding content data from the optical disk 119 to the HDD 116.

In step S115, the HSM 113 refers to a corresponding cache file ID and a volume ID from the store database 166. In step S116, the storage server 165 specifies the disk slot 121 in which the optical disk 119 specified by the volume ID is stored based on the volume database 168. Specifically, the storage server 165 requests the media server 167 to specify the disk slot 121 to which the optical disk 119 is stored which is specified by the volume ID. The media server 167 instructs the volume database 168 to search a volume ID corresponding to the volume ID included in the request from the storage server 165 in volume IDs which specify the optical disks 119 stored in respective disk slot 121 of the jukebox 145. Since the volume database 168 outputs information indicating the disk slot 121 in which the optical disk 119 which is specified by the volume ID included in the request from the storage server 165 is stored, the media server 167 supplies information indicating the disk slot 121 to the storage server 165. Accordingly, the storage server 165 specifies the disk slot 121 in which the optical disk 119 which is specified by the volume ID is stored.

In step S117, the storage server 165 instructs the media server 167 to mount the optical disk 119 stored in the specified disk slot 121 on the drive 118. The media server 167 instructs the juke system 12 to mounts the optical disk 119 which is stored in the specified disk slot 121 on the drive 118 through the changer driver 143. Specifically, the picker 122 of the jukebox 145 picks up the optical disk 119 from the specified disk slot 121 based on control of the juke system 120, carrying the optical disk 119 to be mounted on the drive 118.

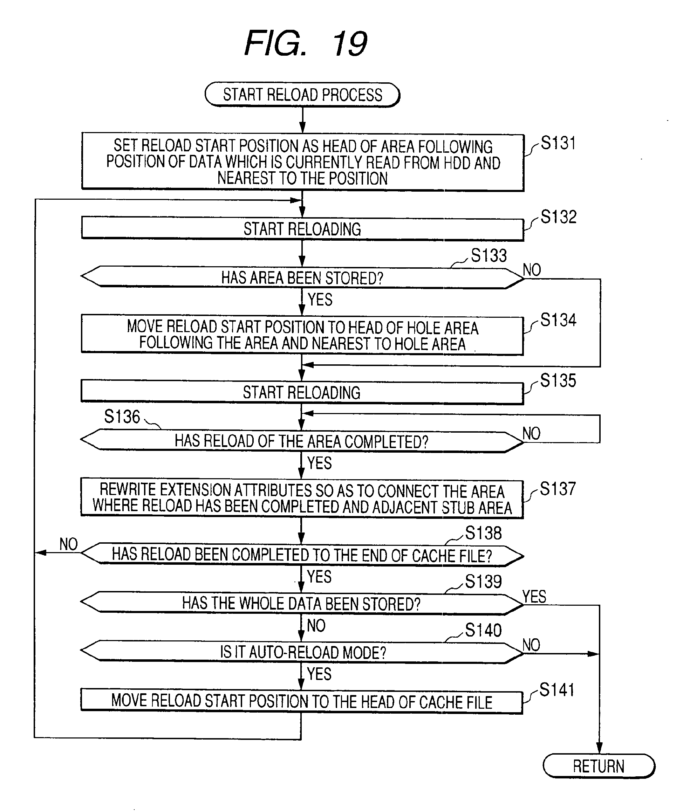

In step S118, a reload process is executed. The details of the reload process will be described later with reference to a flowchart of Fig. 19.

After the process of step S118, the procedure proceeds to step S119.

In step S119, the storage manager 114 judges whether data has been read to the end of the cache file or not. When it is judged that data has not been read to the end of the cache file, the process returns to step S119, and the judgment process is repeated.

In step S119, when it is judged that data has been read to the end of the cache file, the process ends.

Next, with reference to a flowchart of Fig. 19, the details of the reload process in step S118 of Fig. 18 is explained. In step S131, the storage manager 114 instructs the HSM 113 to start reloading by designating a predetermined position. The migration file system 164 in the HSM 113 sets the reload start position as the head of an area which follows the position of data which is currently read from the HDD 116 and which is nearest to the position.

In step S132, the storage server 165 of the HSM 113 starts reloading. Specifically, the storage server 165 reads data in the reload start position from the drive 118 on which the optical disk 119 is mounted, and records the read data in the HDD 116 so that the read data is stored in the predetermined area of the cache file.

In step S133, the migration file system 164 judges whether the area has been stored or not. When it is judged that the area has been stored, in step S134, the reload start position is moved to the head of a hole area which follows the area and which is nearest to the area. In step S133, when it is judged that the area has not been stored, the process of step S134 is skipped.

In step S135, the storage server 165 of the HSM 113 starts reloading.

In step S136, the migration file system 164 judges whether the reload of the area has been completed or not. When it is judged that the reload of the area has not been completed, the process returns to step S136, and the judgment process is repeated.

In step S136, when it is judged that the reload of the area has been completed, the process proceeds to step S137, where the migration file system 164 rewrites the extension attributes so as to connect the area where the reload has been completed and the adjacent stub area.

In step S138, the migration file system 164 judges whether the reload has been completed to the end of the cache file. In step S138, when it is judged that the reload has been completed to the end of the cache file, the process proceeds to step S139, where the migration file system 164 judges whether the whole content data has been recorded in the HDD 116 or not, that is, whether the whole content data has been stored or not.

In step S139, when it is judged that the whole content data has not been stored, the process proceeds to step S140, where the migration file system 164 judges whether it is an auto-reload mode or not. In step S140, when it is judged that it is the auto-reload mode, the process proceeds to step S141, where the migration file system 164 moves the reload start position to the head of the cache file and returns to step S132, repeating the above processes.

In step S138, when it is judged that the reload has not been completed to the end of the cache file, the process returns to step S132, and the above process are repeated.

In step S139, when it is judged that the whole content data has been stored, or in step S140 when it is judged that it is not the auto-reload mode, the process ends.

Accordingly, while content data is read from the cache file of the HDD 116 and before the reading of data which has not been previously recorded in the cache file is executed, data in the hole area is read from the optical disk 119 mounted on the drive 118 and the read data is stored in the cache file. The drive 118 reads data from the optical disk 119 at higher speed as compared with the reading speed of data necessary for the content playback, therefore, data which has not been stored in the cache file of the HDD 116 before the start of the content playback is stored in the cache file of the HDD 116 before the data is read for the content playback. Therefore, data necessary for the content playback can be read from the cache file of the HDD 116 at any time.

As a result, when the reading of content data is requested, the content data can be read out rapidly with little waiting time. Specifically, for example, in the case of an audio content or a video content, video or audio can be reproduced without interrupting video or audio.

Furthermore, since content data is precedently read from the optical disk 119 and stored in the HDD 116, the drive 118 can be freed earlier than the case in which the data read from the optical disk 119 is directly used for the playback. That is to say, the ability of the drive 118 such as a high-speed reading of the optical disk 119 can be fully utilized, and the drive 118 can be used more efficiently.

Accordingly, when the reading of the content whose cache file in the stub file state is stored in the HDD 116 is requested, data is read from the optical disk 119 in which the whole content data is stored, and the read data is stored in the cache file. Then, the data stored in the cache file is read to reproduce the content.

As described above, in the case of reading an arbitrary part, the occurrence of waiting time can be reduced efficiently without complex operations.

It is also preferable that data which is not recorded in the cache file is read from the optical disk 119 and the content is directly reproduced from the data read from the optical disk 119.

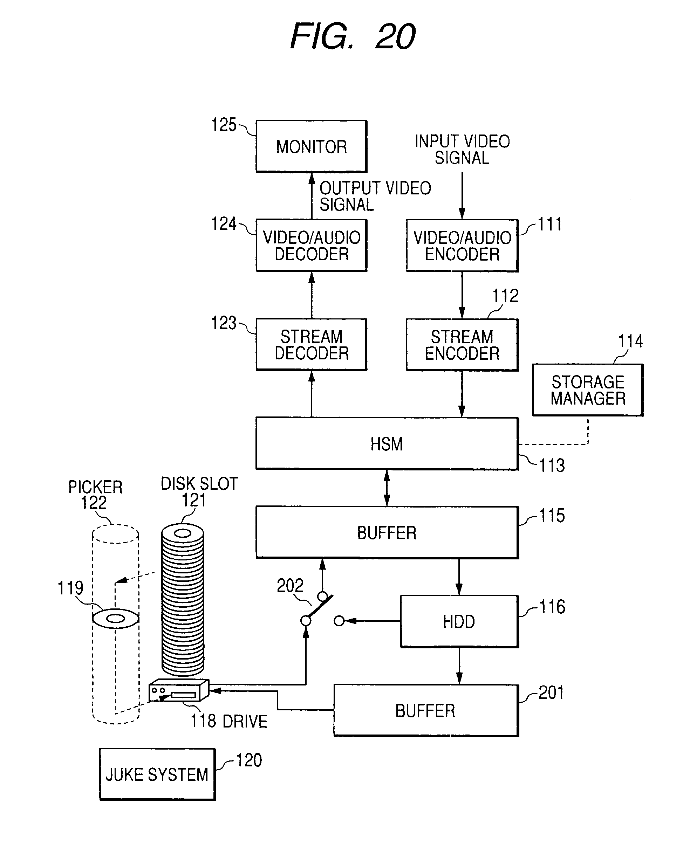

Fig. 20 is a block diagram showing another configuration of the recording and playback system 101 according to an embodiment of the invention in the above case. The same numerals are put on the same parts as the case shown in Fig. 4, and explanation thereof will be omitted.

The HDD 116 supplies a recorded stream (data) to a buffer 201 or a selector 202.

A semiconductor memory or a part of recording space of the HDD 116 is used as the buffer 201, storing a stream (data) supplied from the HDD 116 temporarily and supplying the stored stream (data) to the drive 118.

The selector 202 selects either one of data outputted from the drive 118 or data outputted from the HDD 116 based on control of the HSM 113. The buffer 115 acquires either one of data outputted from the drive 118 and data outputted from the HDD 116, which has been selected by the selector 202, and stores the acquired data.

It is preferable to provide the selector 202 as hardware, but it is also preferable to realize a function equivalent to the selector 202 by using software (processing).

It is further preferable that the selector 202 selects either one of data outputted from the drive 118 and data outputted from the HDD 116 based on control of the storage manager 114.

In the case that data which is not recorded in the cache file is read from the optical disk 119 and the content is directly reproduced from the data read from the optical disk 119, data which is stored in the cache file of the HDD 116 is read from the HDD 116 and data which is not stored in the cache file of the HDD 116 is read from the optical disk 119 mounted on the drive 118 by the drive 118.

Specifically, data in the stub area which has been previously recorded in the HDD 116 is read from the HDD 116 into the buffer 115 and temporarily stored in the buffer 115. Data in the hole area which has not previously been stored in the HDD 116 is read from the optical disk 119 and is not recorded by the HDD 116, directly supplied to the buffer 115 to be temporarily stored in the buffer 115.

The application program 141 reads data which has been temporarily stored in the buffer 115 and outputs an output video signal and an output audio signal.

According to the above, the access to the HDD 116 can be reduced more. Also, the use amount of the recording area of the HDD 116 can be further reduced.

After the optical disk 119 is mounted on the drive 118, an arbitrary part of data on the content including the hole area can be rapidly read out.

It is also preferable to suitably switch the process of the recording and playback system 101 shown in Fig. 4 and the process of the recording and playback system 101 shown in Fig. 20.

Further, recorded contents can be transmitted through a network.

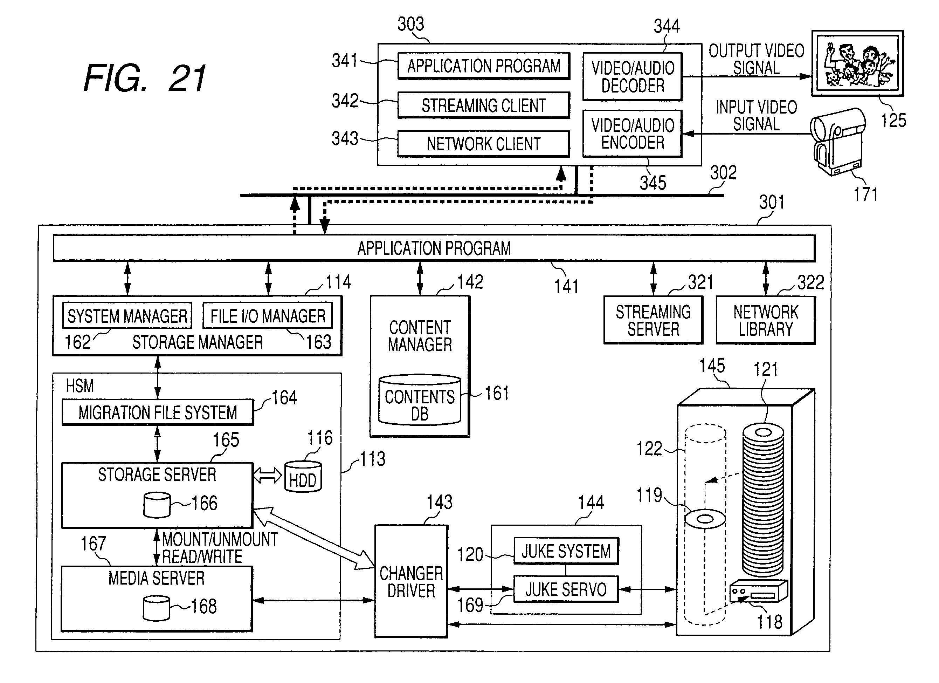

Fig. 21 is a block diagram showing further another configuration of the recording and playback system according to an embodiment of the invention, in which recorded content is transmitted through the network. The same numerals are put on the same parts as the case shown in Fig. 4, and explanation thereof will be omitted.

In this case, the recording and playback system includes a server 301 and a client 303 which is connected to the server 301 through a network 302.

The server 301 includes the HSM 113, the storage manager 114, the application program 141, the content manager 142, the changer driver 143, the jukebox control unit 144, the jukebox 145, a streaming server 321 and a network library 322.

The application program 141 receives a stream including video data and audio data transmitted from the client 303 through the network 302, and supplies the received stream to the storage manager 163. The application program 141 instructs the streaming server 321 to transmit the stream supplied from the storage manager 163.

The streaming server 321 transmits the stream supplied from the application program 141 to the client 303 through the network 302 based on procedures written as the network library 322. The streaming server 321, when data which requests a playback of the content from a designated position (transmission request of a stream) is received, which has been transmitted from the client 303, transmits the stream for reproducing the content from the requested position to the client 303 through the network 302.

In the network library 322, the procedures for transmitting or receiving the stream or data through the network 302 are written.

The network 302 includes a LAN (Local Area Network) such as a home network, an internet, a public line or a dedicated line, which are wireless or use a cable as a transmission medium, transmitting various data (including a stream).

The client 303 includes an application program 341, a streaming client 342, a network client 343, a video/audio decoder 344 and a video audio encoder 345.

The application program 341 has a function of an interface between the system and the user, which acquires instructions from the user, or notifies the user of various information concerning the client 303. The application program 141 controls the whole client 303.

The streaming client 342 receives the stream transmitted from the server 301 through the network 302 and supplies the received stream to the video/audio decoder 344. The network client 343 transmits and receives various data to and from the server 301 through the network 302. The network client 343 transmits the stream supplied from the video/audio encoder 345 to the server 301 through the network 302. The network client 343 also transmits data requesting the content playback from the designated position (transmission request of the stream) to the server 301 through the network 302.

The video/audio decoder 344 divides the stream into video data and audio data. Then, the video/audio decoder 344 decodes the encoded video data and audio data to so-called baseband video data and audio data, and supplies an output video signal and an audio signal (not shown) to the monitor 125, based on the baseband video data and audio data obtained by the decoding.

The video/audio encoder 345 acquires an input video signal and an audio signal from the video camera 171 and converts the acquired input video signal and the audio signal to the baseband video data and audio data. The video/audio encoder 345 encodes the baseband video data and audio data and multiplexes the encoded video data and audio data to generate a stream. The video/audio encoder 345 supplies the generated stream to the network client 343.

Accordingly, the server 301 can rapidly transmits the stream which reproduces the content from the designated position to the client 303 through the network 302.

As described above, according to an embodiment of the invention, the occurrence of waiting time in the case of reading an arbitrary part can be further reduced without complex operations.

It is preferable to use, as s primary storage, other high-speed recording media such as a semiconductor memory instead of the HDD 116, and it is also preferable to use, as a secondary storage, other recording media such as a magnetic disk or a magnetic tape, the cost per recording capacity of which is low as compared with the primary storage.

The above series of processes can be executed by hardware as well as by software. When the series of processes is executed by software, a program including the software is installed from the recording medium to a computer incorporated in the dedicated hardware, or for example, a general-purpose computer which is capable of executing various functions by installing various programs.

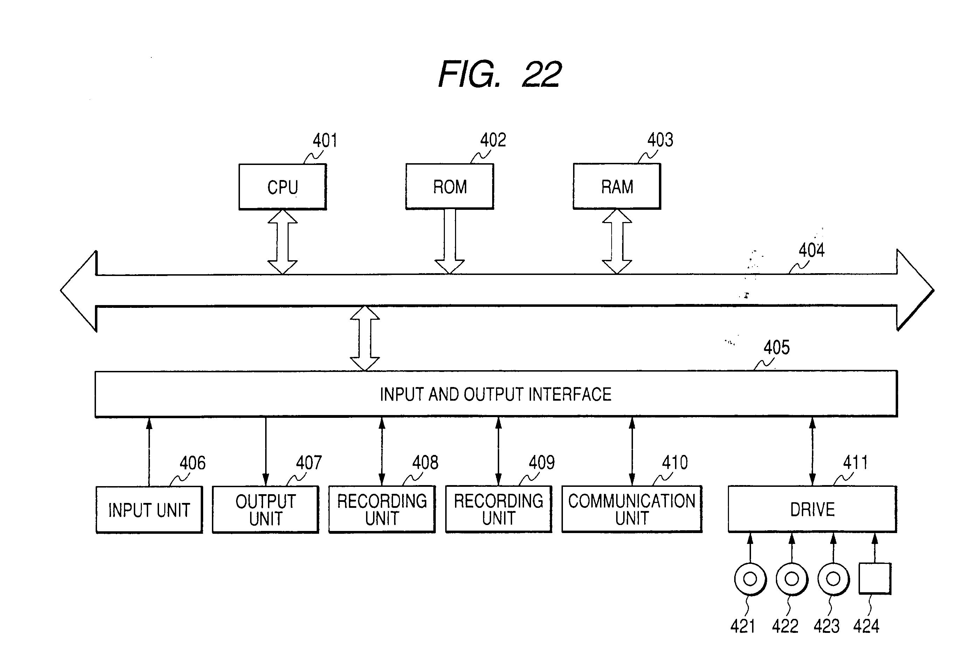

Fig. 22 is a block diagram showing an example of a configuration of a personal computer which executes the above series of processes by the program. A CPU (Central Processing Unit) 401 executes various processes according to the program stored in a ROM (Read Only Memory) 402, a recording unit 408 or a recording unit 409. In a RAM (Random Access Memory) 403, programs executed by the CPU 401 and data are suitably stored. The CPU 401, the ROM 402, and RAM 403 are connected with each other by a bus 404.

As the CPU 401, "Cell" can be applied, which is written in the article "Birth of Cell", Nikkei Electronics published by Nikkei Business Publications, Inc., issued on February 28, 2005, pages 89 to 117.

An input and output interface 405 is also connected to the CPU 401 through the bus 404. To the input and output interface 405, an input unit 406 including a keyboard, a mouse, a microphone and the like, and an output unit 407 including a display, a speaker and the like are connected. The CPU 401 executes various processes in response to instructions inputted from the input unit 406. Then, the CPU outputs results of processes to the output unit 407.

The recording unit 408 which is connected to the input and output interface 405 supports, for example, the HDD 116, which records programs executed by the CPU 401 and various data. The recording unit 409 supports, for example, the jukebox 145, which records various data and programs executed by the CPU 401. A communication unit 410 communicates with external apparatuses such as the client 303 through the network 302 such as the internet or the LAN.

It is also preferable to acquire a program through the communication unit 410 and store it in the recording unit 408 or the recording unit 409.

A drive 411 connected to the input and output interface 405, when a magnetic disk 421, an optical disk 422, a magneto-optical disk 423, or a semiconductor memory 424 and the like are mounted thereon, drives them to acquire programs and data recorded in these media. The acquired programs and data are transferred to the recording unit 408 or the recording unit 409 and recorded therein, if necessary.

The recording media in which programs for performing the series of processes are stored, as shown in Fig. 22, are not only configured to have package media having the magnetic disk 421 (including a flexible disk), the optical disk 422 (including CD-ROM (Compact Disc-Read Only Memory), DVD (Digital Versatile Disc), the magneto-optical disk 423 (MD (mini-Disc))(Trademark of Sony Corporation)), or the semiconductor memory 424, which are distributed for providing programs to the user, apart from the computer, but also configured to have the ROM 402 in which programs are recorded, hard disk included in the recording unit 408 or the optical disk 119 included in the recording unit 409, which are provided to the user in a state previously incorporated in the computer.

The program for performing the above series of processes can be installed in the computer, using wired or wireless communication media such as a local area network, the internet, a digital satellite broadcast through the interface such as a router, a modem, if necessary.

In the specification, the step of writing programs stored in the recording media includes not only the process performed in time series in the written order but also the process executed in parallel or individually, if is not always processed in time series.

In the specification, the "system" means the whole apparatus including plural devices.

A recording device includes: a first recording medium in which temporally continuous content data is recorded; a second recording medium in which the whole content data is recorded; and a recording control means for controlling the recording of content data in the first recording medium and the second recording medium so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A recording device, comprising:
a first recording medium in which temporally continuous content data is recorded;
a second recording medium in which the whole content data is recorded; and
a recording control means for controlling the recording of content data in the first recording medium and the second recording medium so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

2. The recording device according to claim 1,
wherein the recording control means controls the recording of content data in the first recording medium and the second recording medium so that, in the case that the data amount of content data recorded in the first recording medium does not become less than a predetermined threshold even after a part of data whose whole data is recorded in the second recording medium is deleted from the first recording medium, with respect to a content in which the process of deleting a part of content data from the first recording medium was interrupted after the whole content data was recorded in the second recording medium, the interrupted process is started again, and when the data amount of content data recorded in the first recording medium does not become less than a threshold even after the interrupted process is completed, with respect to a content whose data is not recorded in the second recording medium, the whole content data is recorded in the second recording medium, then, a part of content data is deleted from the first recording medium.

3. The recording device according to claim 1,
wherein the recording control means controls the recording of content data in the first recording medium so that a part of content data is deleted from the first recording medium in order that the content is scanned by a designated scanning method.

4. The recording device according to claim 3,
wherein the recording control means controls the recording of content data in the first recording means so that a part of content data is deleted in order that the content is scanned by a method of pre-order traversal, in-order traversal or post-order traversal.

5. The recording device according to claim 1, further comprising:
a storage means for storing access history to contents, and
wherein the storage means controls the recording of content data in the first recording medium based on the access history to the content.

6. A recording method of a recording device which records temporally continuous content data in a first recording medium and which records the whole content data in a second recording medium, comprising the steps of:
judging whether a part of content data is deleted from the first recording medium or not; and
controlling the recording of content data in the first recording medium and the second recording medium so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

7. A program product allowing a computer which controls a recording device recording temporally continuous content data in a first recording medium and the whole content data in a second recording medium to execute processes comprising the steps of,
judging whether a part of content data is deleted from the first recording medium or not; and
controlling the recording of content data in the first recording medium and the second recording medium so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.

8. A program recording medium in which the program product according to claim 7 is recorded.

9. A recording device, comprising:
a first recording medium in which temporally continuous content data is recorded;
a second recording medium in which the whole content data is recorded; and
a recording control configured to control the recording of content data in the first recording medium and the second recording medium so that, in the case of deleting a part of content data from the first recording medium, a part of content data whose whole data is recorded in the second recording medium is deleted from the first recording medium, and when the data amount of content data recorded in the first recording medium does not become less than a predetermined threshold even after the part of content data whose whole data is recorded in the second recording medium is deleted from the first recording medium, with respect to a content in which the process of deleting a part of content data from the first recording medium was interrupted after the whole content data was recorded in the second recording medium, the interrupted process is started again, or with respect to a content whose data is not recorded in the second recording medium, the whole content data is recorded in the second recording medium, then, a part of content data is deleted from the first recording medium.
